# EUROPEAN PATENT APPLICATION

(11) **EP 4 480 992 A1**
(43) Date of publication of application: **25.12.2024**
(21) Application number: 23180075.6
(22) Date of filing: 19.06.2023
(51) Int. Cl.: C08G 65/26, C08G 65/336, C08G 77/08, C08G 77/46, C08L 83/12

(54) **POLYETHER-POLYSILOXANE GRADIENT COPOLYMERS**

(71) Applicant: Henkel AG & Co. KGaA, 40589 Düsseldorf (DE)
(72) Inventor: Damke, Jan-Erik, 41541 Dormagen (DE); Grefe, Lea, 18059 Rostock (DE); Mejia, Esteban, 18059 Rostock (DE)

(57) **Abstract**

The invention relates to a polyether-polysiloxane copolymer having a number average molecular weight (Mₙ) of 500-50,000 g/mol, a polydispersity index of 1.0-2.0, and an unsaturation value of less than 0,02 meq/g, wherein said copolymer is a gradient copolymer.

The invention also relates to a two-component (2K) composition comprising at least one component (I) and at least one component (II), wherein component (I) comprises at least one compound having at least one hydroxyl group-reactive functionality preferably selected from isocyanate groups, cyano groups, melamine groups, epoxy groups, acrylate groups, methacrylate groups, ester groups, carbonate groups, cyclocarbonate groups, carboxylic acid groups or anhydride groups, most preferably selected from isocyanate groups, and component (II) comprises a hydroxyl-functionalized polyether-polysiloxane copolymer according to the invention.

The invention further relates to a method for producing a polyether-polysiloxane copolymer according to the invention, wherein a mixture of at least one alkylene oxide and at least one siloxane is polymerized in the presence of a Double Metal Cyanide (DMC) catalyst.

Finally, the invention also relates to use of the polyether-polysiloxane copolymer according to the invention, a two-component (2K) composition according to the invention or copolymers obtainable by the method of according to the invention as a reactive component for coating, sealant or adhesive compositions based on active hydrogen reactive compounds.

## Description

### FIELD OF THE INVENTION

The present invention is directed to polyether-polysiloxane gradient copolymers having a number average molecular weight (Mₙ) of 500-50,000 g/mol, a polydispersity index of 1.0-2.0, and an unsaturation value of less than 0,02 meq/g. The present invention is also directed to polyether-polysiloxane copolymers obtainable by polymerization of a mixture of at least one alkylene oxide and at least one siloxane in the presence of a Double Metal Cyanide (DMC) catalyst. The copolymers of the invention are particularly suitable as a reactive component for coating, sealant or adhesive compositions based on active hydrogen reactive compounds, especially for sealant compositions.

### BACKGROUND OF THE INVENTION

Double metal cyanide (DMC) compounds, commonly containing zinc hexacyanocobaltate (Zn₃[Co(CN)₆]₂) are known in the art as catalysts for inter alia the ring-opening polymerization of epoxides to produce polyethers. As compared to polymers obtained using basic catalysts, the DMC catalysts provide polyethers that are characterized by a narrow molecular weight distribution, a high average molar mass and a very low number of double bonds at the ends of the polymer chains. In addition, DMC catalysts may also be used to polymerize said epoxides with CO₂, and with other suitable comonomers such as oxetanes, cyclic carbonates, cyclic anhydrides and lactones.

As known in the art, the activity of a given Double Metal Cyanide (DMC) complex depends on the presence of defects in its solid-state structure. Double Metal Cyanide compounds prepared in the absence of complexing agents tend to be highly crystalline and inactive for epoxide polymerization. Conversely, DMC complexes prepared in the presence of a suitable complexing agent - typically an ether or an aliphatic alcohol - may be characterized as mixtures of a highly crystalline DMC compound with a more amorphous component: such complexes can actively catalyze the polymerization of epoxides.

There are several reports in the patent literature dealing with DMC catalysts, their applications and their associated activity.

WO 2012/136658 A1 is in the field of catalysts, as used for example in methods for the production of polymers. The invention relates in particular to catalysts based a double metal cyanide compounds and proposes a catalyst of this type. The application discloses a catalyst for catalyzing the polymerization of epoxides comprising a reaction product of or a complex compound of:
a) a double metal cyanide compound;
b) an organic complexing agent; and
c) a primary alcohol with 6 to 24 C atoms.

However, polyether-polysiloxane copolymers are not mentioned or contemplated in WO 2012/136658 A1 and the polymers of WO 2012/136658 A1 are inferior in numerous ways, especially in limited upper molecular weight of around 18,000 g/mol.

On the other hand, polyether-polysiloxane copolymers are also known. The most popular way for obtaining A-(B-OH)ₙ polyether (B)-polydimethysiloxane (A) polyols is by hydrosilylation of unsaturated polyether-alcohols with SiH-terminated PDMS blocks. The resulting products are preferably characterized by high hydrolytic stability due to the absence of Si-O-C structural moieties. The typical drawback of these materials is that they contain residues of heavy metals, typically Pt or Rh coming from the homogeneous catalysts used for their synthesis. These catalysts are commonly chloroplatinic acid, Karstedt's and Wilkinson's as described in US2010/0324251.

The propoxylation of hydroxyl-terminated PDMS using Double Metal Cyanide (DMC) catalyst has been recently described in US7834082. There, the inventors teach the preparation of (PPG/PDMS) AB or ABA block copolymers with very low unsaturation value. However, these polymers are of the undesired block copolymer type, which may cause problems in application, e.g., because of microphase separation.

The propoxylation of hydroxyalkyl-terminated PDMS has also been reported in US5290912. There, the inventors use primary-alcohol terminated starters, which are difficult to propoxylate using DMC catalysts due to their high acidity and strong coordination with the metal centers. Therefore, rather harsh conditions or the use of solvents and additives (like antioxidants) are needed. In this case also block copolymers are obtained.

The present invention aimed at better solutions for the problems of conventional products. In particular, components having very low viscosity, very low unsaturation values, low polydispersity index, and low catalyst contents were desired, which can be produced with high molecular weights, i.e., higher molecular weight than the commercially available analogues, and which possess high hydrolytic stability. Said component should be particularly suitable for applications in coating, adhesives and sealants in order to improve the properties and the performance of the final products.

These underlying problems of the claimed invention have been solved by the present invention.

### STATEMENT OF THE INVENTION

In accordance with a first aspect of the invention, there is provided a polyether-polysiloxane copolymer having a number average molecular weight (Mₙ) of 500-50,000 g/mol, a polydispersity index of 1.0-2.0, and an unsaturation value of less than 0,02 meq/g, wherein said copolymer is a gradient copolymer.

In accordance with a second aspect of the invention, there is provided a two-component (2K) composition comprising at least one component (I) and at least one component (II), wherein component (I) comprises at least one compound having at least one hydroxyl group-reactive functionality preferably selected from isocyanate groups, cyano groups, melamine groups, epoxy groups, acrylate groups, methacrylate groups, ester groups, carbonate groups, cyclocarbonate groups, carboxylic acid groups or anhydride groups, most preferably selected from isocyanate groups, and component (II) comprises a hydroxyl-functionalized polyether-polysiloxane copolymer according to the first aspect of the invention.

In accordance with a third aspect of the invention, there is provided a method for producing a polyether-polysiloxane copolymer according to the first aspect of the invention, wherein a mixture of at least one alkylene oxide and at least one siloxane is polymerized in the presence of a Double Metal Cyanide (DMC) catalyst.

In accordance with a fourth aspect of the invention, there is provided use of the polyether-polysiloxane copolymer according to the first aspect of the invention, a two-component (2K) composition according to the second aspect of the invention or copolymers obtainable by the method of according to according to the third aspect of the invention as a reactive component for coating, sealant or adhesive compositions based on active hydrogen reactive compounds.

The polyether polyols-polysiloxane copolymers of the invention show very low viscosity particularly due to the gradient type copolymer, very low unsaturation values particularly due to preparation using a DMC catalyst and process with "fast diffusion rates", low polydispersity index, and low catalyst contents. They can be produced with high molecular weights (higher than the commercially available analogues) and possess high hydrolytic stability. Said polyether polyols-polysiloxane copolymers of the invention are particularly suitable for applications in coating, adhesives and sealants in order to improve the properties and the performance of the final product.

The solutions of the claimed invention avoid use of expensive, difficult to prepare and to handle components, such as PDMS as starter, problems resulting from microphase separation, and provide an easy and simple implementable way for achieving the advantages and effects of the claimed invention. The ratio of the individual components of the polyether-polysiloxane copolymer of the invention is very flexible, can be chosen freely and may be adapted to specific needs of application. In addition, the end groups of the polyether-polysiloxane copolymers of the invention are controllable by preparation process and functionalization of the polyether-polysiloxane copolymers, wherein functionalization of the terminal ends of the copolymers with aliphatic hydroxyl groups or Si-OH end groups has proven to be particularly advantageous, since said hydroxyl groups can be used to further link the polyether-polysiloxane copolymers of the invention to other components by polymer reaction.

The polyether polyols-polysiloxane copolymers of the invention are particularly suited for moisture cured reactive elastic adhesives and sealants and combine the advantages of polyols and polysiloxane in the final adhesive. The key here is the combination of polyether and PDMS polymer in one copolymer with good molecular weight distribution.

Additionally, to make the solution of the claimed invention as applicable to industrial production as possible, neither a glove-box, nor any other inert atmosphere techniques are preferably used to transfer the reactants to the reactor. So, no strict exclusion of air or moisture is required, in contrast to previous reports of a PO/D3-copolymerization to produce AB gradient copolymers using a DMC catalyst.

Finally, the solution of the claimed invention is applicable to industrial production because the ratio of monomers, especially PO/ PDMS is very flexible, and end groups are controllable by polymerization process.

### DEFINITIONS

As used herein, the singular forms "a", "an" and "the" include plural referents unless the context clearly dictates otherwise.

The terms "comprising", "comprises" and "comprised of" as used herein are synonymous with "including", "includes", "containing" or "contains", and are inclusive or open-ended and do not exclude additional, non-recited members, elements or method steps.

When amounts, concentrations, dimensions and other parameters are expressed in the form of a range, a preferable range, an upper limit value, a lower limit value or preferable upper and limit values, it should be understood that any ranges obtainable by combining any upper limit or preferable value with any lower limit or preferable value are also specifically disclosed, irrespective of whether the obtained ranges are clearly mentioned in the context.

The words "preferred" and "preferably" are used frequently herein to refer to embodiments of the disclosure that may afford particular benefits, under certain circumstances. However, the recitation of one or more preferable or preferred embodiments does not imply that other embodiments are not useful and is not intended to exclude those other embodiments from the scope of the disclosure.

As used herein, room temperature is 23°C plus or minus 2°C.

The molecular weights given in the present text refer to number average molecular weights (Mₙ), unless otherwise stipulated. All molecular weight data refer to values obtained by gel permeation chromatography (GPC) calibrated against polystyrene standards in accordance with DIN 55672-1 :2007-08 at 40°C, unless otherwise stipulated.

As used herein, "polydispersity index" refers to a measure of the distribution of molecular mass in a given polymer sample. The polydispersity index is calculated by dividing the weight average molecular weight (M_{w}) by the number average molecular weight (Mₙ).

As used herein, the term "equivalent (eq.)" relates, as is usual in chemical notation, to the relative number of reactive groups present in the reaction; the term "milliequivalent" (meq) is one thousandth (10⁻³) of a chemical equivalent.

The term "equivalent weight" as used herein refers to the molecular weight divided by the number of a function concerned. As such, "epoxy equivalent weight" (EEW) means the weight of resin, in grams, that contains one equivalent of epoxy.

Unless otherwise stated, hydroxyl (OH) values given herein are determined following Deutsche (DGF) Einheitsmethoden zur Untersuchung von Fetten, Fettprodukten, Tensiden und verwandten Stoffen (Gesamtinhaltsverzeichnis 2016) C-V 17b (53).

As used herein, the term "halide" denotes fluoride, chloride, bromide or iodide anions.

As used herein, "C₁-C₈ alkyl" group refers to a monovalent group that contains 1 to 8 carbons atoms, that is a radical of an alkane and includes straight-chain and branched organic groups. Examples of alkyl groups include, but are not limited to: methyl; ethyl; propyl; isopropyl; n-butyl; isobutyl; sec-butyl; tert-butyl; n-pentyl; n-hexyl; n-heptyl; and, 2-ethylhexyl. In the present invention, such alkyl groups may be unsubstituted or may be substituted with one or more substituents such as halo, nitro, cyano, amido, amino, sulfonyl, sulfinyl, sulfanyl, sulfoxy, urea, thiourea, sulfamoyl, sulfamide and hydroxy. The halogenated derivatives of the exemplary hydrocarbon radicals listed above might, in particular, be mentioned as examples of suitable substituted alkyl groups. In general, however, a preference for unsubstituted alkyl groups containing from 1-6 carbon atoms (C₁-C₆ alkyl) - for example unsubstituted alkyl groups containing from 1 to 4 carbon atoms (C₁-C₄ alkyl) - should be noted.

As used herein, "C₂-C₁₂ alkenyl" group refers to an aliphatic carbon group that contains 2 to 12 carbon atoms and at least one double bond. Like the aforementioned alkyl group, an alkenyl group can be straight or branched, and may optionally be substituted. The term "alkenyl" also encompasses radicals having "cis" and "trans" configurations, or alternatively, "E" and "Z" configurations, as appreciated by those of ordinary skill in the art. In general, however, a preference for unsubstituted alkenyl groups containing from 2 to 10 (C₂₋₁₀) or 2 to 8 (C₂₋₈) carbon atoms should be noted. Examples of C₂-C₁₂ alkenyl groups include, but are not limited to: 2-butenyl; 4-methylbutenyl; 1-pentenyl, 2-pentenyl, 3-pentenyl, 4-pentenyl, 4-methyl-3-pentenyl, 1-hexenyl, 3-hexenyl, 5-hexenyl, 1-heptenyl, 1-octenyl and n-dodecenyl.

The term "C₃-C₁₀ cycloalkyl" is understood to mean a saturated, mono-, bi- or tricyclic hydrocarbon group having from 3 to 10 carbon atoms. Examples of cycloalkyl groups include: cyclopropyl; cyclobutyl; cyclopentyl; cyclohexyl; cycloheptyl; cyclooctyl; adamantane; and, norbornane.

As used herein, an "C₆-C₁₈ aryl" group used alone or as part of a larger moiety - as in "aralkyl group" - refers to optionally substituted, monocyclic, bicyclic and tricyclic ring systems in which the monocyclic ring system is aromatic or at least one of the rings in a bicyclic or tricyclic ring system is aromatic. The bicyclic and tricyclic ring systems include benzofused 2-3 membered carbocyclic rings. Exemplary aryl groups include: phenyl; indenyl; naphthalenyl, tetrahydronaphthyl, tetrahydroindenyl; tetrahydroanthracenyl; and, anthracenyl. And a preference for phenyl groups may be noted.

As used herein, an "aralkyl" group refers to an alkyl group that is substituted with an aryl group. An example of an aralkyl group is benzyl.

The term "polymerization conditions" means the reaction conditions necessary to combine monomers into polymers, and in the context of this invention, those conditions necessary for ring-opened alkylene oxides to combine with one another to form a polyether polymer.

As used herein, the term "ring-opening polymerization" denotes a polymerization in which a cyclic compound (monomer) is opened to form a linear polymer. Reference in this context may be made to inter alia in: i) Duda, A. et al. Thermodynamics and Kinetics of Ring-Opening Polymerization in Handbook of Ring-Opening Polymerization, Wiley-VCH, Weinheim, Germany, (2009) page 8; ii) Choijnowski, J. et al. Kinetically controlled ring-opening polymerization, J. Inorg. Organomet. Polym. (1991) 1, pages 299-323; and, iii) Nuyken et al. Ring-Opening Polymerization-An Introductory Review Polymers 2013, 5, 361-403.

As used herein, the term "catalytic amount" means a sub-stoichiometric amount of catalyst relative to a reactant.

The term "double metal cyanide (DMC) compound" is used in accordance with its standard meaning as an inorganic compound compromising cyanide anions and two different metal cations. For completeness, the two metal cations differ from each other based either on the metal per se or on their oxidation numbers.

Double metal cyanide catalyst complexes and the methods by which such complexes may be prepared are known in the art. The attention of the reader may, for example, be directed to: US 2008/0167502 (BASF); US 2003/0158449 (Bayer); US 2003/0069389 (Shell); US 2004/0220430 (Repsol Quimica); US 2005/0065383 (Dow); WO2012/136657 A1 (Henkel AG & Co. KGgA); EP0894108 (Arco); US Patent No. 5,767,323 (Yiannakis et al.); and, US Patent No. 5,536,883 (Arco). With specific regard to double metal cyanide (DMC) catalyst complexes of Formula (I), the disclosure of WO2012/136658 A1 (Henkel AG & Co. KGgA) and particularly the passage from page 2, final paragraph to page 6, 1^{st} paragraph thereof, is incorporated herein by reference.

In those embodiments where the double metal cyanide catalyst complexes comprise an alcohol (A), that alcohol term is intended to encompass both the protonated and de-protonated (alcoholate) forms thereof.

As regards said double metal cyanide catalyst complexes, the term "carboxylate" refers to -COO-moiety. Suitable carboxylate anions may be aliphatic or aromatic and may typically contain from 1 to 24, preferably from 2 to 18 and more preferably from 2 to 12 carbon atoms. Examples of aliphatic carboxylate anions include but are not limited to: formate; acetate; propionate; butyrate; 2-ethylhexanoate; n-octoate; and, decanoate. Examples of aromatic carboxylates include but are not limited to: benzoate; alkyl-substituted benzoate; halo-substituted benzoate; 4-cyanobenzoate; 4-trifluoromethylbenzoate; salicylate; 3,5-di-t-butylsalicylate; and subsalicylate.

As further used herein with regard to said double metal cyanide catalyst complexes, "an organic complexing agent" - denoted as (L, L¹, L²) in Formulae (II) and (II-A) - is understood to be an organic compound that has a functional group acting as an electron donor and is therefore capable of occupying a coordination site on a metallic central atom or central ion. Herein, compounds that are suitable as organic complexing agents preferably also exhibit a certain solubility in water.

Suitable organic complexing agents of the present invention - denoted where applicable as L, L¹ and L² -may be monomeric, oligomeric or polymeric compounds and may broadly include: alcohols and in particular aliphatic C₁ to C₂₄ alcohols and polyalkylene glycol homo- and co-polymers; aldehydes; ketones; ethers, such as monoglyme, diglyme, 1 ,4-dioxane and furan; esters; amides; urea derivatives; nitriles; sulfides; and, mixtures of two or more of the above-mentioned compounds.

In an illustrative embodiment, each organic complexing agent (L, L¹, L²) of Formulae (II) and (II-A) may be independently selected from the group consisting of: aliphatic C₁ to C₂₄ alcohols such as ethanol, i-propyl alcohol, n-butylalcohol, i-butylalcohol, sec-butyl alcohol, tert-butyl alcohol; monoglyme; diglyme; 1,4-dioxane; furan; polyalkylene glycol homo- and co-polymers; polycarbonates; polyalkylene glycol sorbitan esters; polyalkylene glycol glycidyl ethers; polyacrylamide; poly(acrylamide-co-acrylic acid); polyacrylic acid; poly(acrylamide-co-maleic acid); polyacrylonitrile; polyalkyl acrylate; polyalkyl methacrylate; polyvinyl methyl ether; polyvinyl ethyl ether; polyvinyl acetate; polyvinyl alcohol; poly-N-vinylpyrrolidone; poly(N-vinylpyrrolidone-co-acrylic acid); polyvinyl methyl ketone; poly(4-vinylphenol); poly(acrylic acid-co-styrene); oxazoline polymers; polyalkylenimines; maleic acid and maleic anhydride copolymers; hydroxyethylcellulose; polyacetates; ionic surface- and interface-active compounds; carboxylic esters of polyhydric alcohols; and, glycosides.

The term "polyalkylene glycol" designates polyalkyleneglycol radicals of which the alkylene radical desirably contains from 2 to 7 carbon atoms. Thus, in some embodiments, polyalkylene glycol polymers can include polymers of the following general formula H-O-(RO)ₓ-H in which: R is a linear or branched C₂ to C₇ alkyl; and x is a positive integer in the range of from 2 to 1,000. Importantly, polyalkylene glycol polymers can be in the form of a homopolymer, or mixtures or combinations of homopolymers, or can include copolymers, such as block or random copolymers, or mixtures of combinations of such copolymers, or can include mixtures or combinations of homopolymers and copolymers.

The term "ionic surface- or interface-active compounds" employed in relation to said double metal cyanide catalyst complexes is established in the art, as may be attested to by referring to inter alia: Ullmann's Encyclopedia of Industrial Chemistry, 5th Edition (1994) Vol. A25, pp. 747-817; Kirk-Othmer Encyclopedia of Chemical Technology, 4th Edition (1997) Vol. 23, pp. 477-541, John Wiley & Sons, New York; Tensid-Taschenbuch, 2nd Edition (1982), H. Stache (ed.), Carl Hanser Verlag, Munich; and, Surfactant Science Series, Vol. 1-74 (1967-1998) M. J. Schick (Ed.), Marcel Decker, New York. Examples of such ionic surface- or interface-active compounds may be found in the group of surfactants, soaps, emulsifiers, detergents and dispersants.

The double metal cyanide catalyst complexes may be crystalline, partially crystalline or amorphous: crystallinity is conventionally analysed by powder X-ray diffractometry. Further, the composition of the double metal cyanide catalyst complexes may conventionally be analyzed by means of: gas chromatography; elemental analysis; thermogravimetry; or, extractive removal of the moieties (L, L¹, L²) thereof with subsequent gravimetric determination.

As used herein, "silica" is intended to refer to any type of silica, silicic acid or a silicic acid derivative. The term particularly includes precipitated silica, crystalline silica, colloidal silica, silica xerogels, silica aerogels and fumed silica.

As used herein, the term "carbonaceous material" refers to any type of coal or carbon allotropes independent of its source or production method.

As used herein, the term "isoelectronic material" refers to a material which is composed of two or more chemical species such as atoms, molecules, radicals, ions, etc., differing in the atoms that comprise them while having the same number of valence electrons and the same structure.

Where mentioned herein, the "methanol wettability value" refers to the concentration of methanol (vol % of methanol in methanol/water mixture) required to wet 100 percent of support materials, i.e., the amount of methanol needed to produce 100 percent wetting (0 percent suspended and 100 percent in the sediment). Any hydrophobic support material, e.g., fumed oxides of which surfaces have been modified with non-hydrolysable organic molecules cannot be wetted by water. However, these materials can be wetted using a methanol/water mixture. The content of methanol in such mixture - in vol % - is a measure for the degree of hydrophobicity. The methanol wettability value is measured according to the methanol wettability test as described herein.

As used herein, the term "BET surface area" refers to the Brunauer, Emmett and Teller (BET) method according to ASTM D1993-91. Where applicable to the support materials of the present invention, the BET surface area was here determined by fitting five relative-pressure points from a nitrogen sorption isotherm measurement that was made with a Micromeritics TriStar 3000^{™} instrument. A FlowPrep-060^{™} station provided heat and a continuous gas flow to prepare samples for analysis. Prior to nitrogen sorption, the support material (inorganic oxide) samples were dried by heating to a temperature of 160°C in flowing nitrogen (P5 grade) for a minimum of one (1) hour.

The term "Lewis acid" used herein denotes any molecule or ion - often referred to as an electrophile - capable of combining with another molecule or ion by forming a covalent bond with two electrons from the second molecule or ion: a Lewis acid is thus an electron acceptor. The preferred Lewis acids for use in the polymerization processes of the present invention are characterized as being "non-protic": they are Lewis acids which are not capable of functioning as a source of a proton (H⁺). Particularly preferred Lewis acids for purposes of this invention include halides of elements selected from the group consisting of aluminum, manganese, iron, cobalt, boron, iron, titanium, tin, chromium, magnesium, vanadium, hafnium, zirconium and zinc.

In the copolymerization processes of the present invention, the amount of (non-protic) Lewis acid should be adjusted such that the activity of the double metal cyanide complex catalyst, as measured by the weight of epoxide reacted per unit of time at a given temperature, does not decrease more than 20% as compared to the catalyst activity under the same conditions in the absence of Lewis acid: in this regard it will often be advantageous to utilize a Lewis acid: [DMCC] weight ratio in the range of about 0.1 to 1.0.

As used herein, the term "epoxide" denotes a compound characterized by the presence of at least one cyclic ether group, namely one wherein an ether oxygen atom is attached to two adjacent carbon atoms thereby forming a cyclic structure. The term is intended to encompass monoepoxide compounds, polyepoxide compounds (having two or more epoxide groups) and epoxide terminated prepolymers. The term "monoepoxide compound" is meant to denote epoxide compounds having one epoxy group. The term "polyepoxide compound" is meant to denote epoxide compounds having at least two epoxy groups. The term "diepoxide compound" is meant to denote epoxide compounds having two epoxy groups.

The epoxide may be unsubstituted but may also be inertly substituted. Exemplary inert substituents include chlorine, bromine, fluorine and phenyl.

As used herein, "polyol" refers to any compound comprising two or more hydroxyl groups. The term thus encompasses diols, triols and compounds containing four or more -OH groups.

As used herein "polyisocyanate" means a compound comprising at least two -N=C=O functional groups, for example from 2 to 5 or from 2 to 4 -N=C=O functional groups. Suitable polyisocyanates include aliphatic, cycloaliphatic, aromatic and heterocyclic isocyanates, dimers and trimers thereof, and mixtures thereof.

Aliphatic and cycloaliphatic polyisocyanates can comprise from 6 to 100 carbon atoms linked in a straight chain or cyclized and having at least two isocyanate reactive groups. Examples of suitable aliphatic isocyanates include but are not limited to straight chain isocyanates such as ethylene diisocyanate, trimethylene diisocyanate, tetramethylene diisocyanate, 1 ,6-hexamethylene diisocyanate (HDI), octamethylene diisocyanate, nonamethylene diisocyanate, decamethylene diisocyanate, 1,6,11-undecanetriisocyanate, 1,3,6- hexamethylene triisocyanate, bis(isocyanatoethyl)-carbonate, and bis (isocyanatoethyl) ether. Exemplary cycloaliphatic polyisocyanates include, but are not limited to, dicyclohexylmethane 4,4' -diisocyanate (H12MDI), 1-isocyanatomethyl-3-isocyanato-1,5,5-trimethylcyclohexane (isophorone diisocyanate, IPDI), cyclohexane 1,4-diisocyanate, hydrogenated xylylene diisocyanate (H6XDI), 1-methyl-2,4-diisocyanato-cyclohexane, m- or p-tetramethylxylene diisocyanate (m-TMXDI, p-TMXDI) and dimer fatty acid diisocyanate.

The term "aromatic polyisocyanate" is used herein to describe organic isocyanates in which the isocyanate groups are directly attached to the ring(s) of a mono- or polynuclear aromatic hydrocarbon group. In turn the mono- or polynuclear aromatic hydrocarbon group means an essentially planar cyclic hydrocarbon moiety of conjugated double bonds, which may be a single ring or may include multiple condensed (fused) or covalently linked rings. The term aromatic also includes alkylaryl. Typically, the hydrocarbon (main) chain includes 5, 6, 7 or 8 main chain atoms in one cycle. Examples of such planar cyclic hydrocarbon moieties include, but are not limited to, cyclopentadienyl, phenyl, napthalenyl-, [10]annulenyl-(1,3,5,7,9-cyclodecapentaenyl-), [12]annulenyl-, [8]annulenyl-, phenalene (perinaphthene), 1,9-dihydropyrene, chrysene (1,2-benzophenanthrene). Examples of alkylaryl moieties are benzyl, phenethyl, 1-phenylpropyl, 2-phenylpropyl, 3-phenylpropyl, 1-naphthylpropyl, 2-naphthylpropyl, 3-naphthylpropyl and 3-naphthylbutyl.

Exemplary aromatic polyisocyanates include, but are not limited to: all isomers of toluene diisocyanate (TDI), either in the isomerically pure form or as a mixture of several isomers; naphthalene 1,5-diisocyanate; diphenylmethane 4,4' -diisocyanate (MDI); diphenylmethane 2,4' -diisocyanate and mixtures of diphenylmethane 4,4' -diisocyanate with the 2,4' isomer or mixtures thereof with oligomers of higher functionality (so-called crude MDI); xylylene diisocyanate (XDI); diphenyl-dimethylmethane 4,4' -diisocyanate; di- and tetraalkyl-diphenylmethane diisocyanates; dibenzyl 4,4 ' -diisocyanate; phenylene 1,3-diisocyanate; and, phenylene 1,4-diisocyanate.

It is noted that the term "polyisocyanate" is intended to encompass pre-polymers formed by the partial reaction of the aforementioned aliphatic, cycloaliphatic, aromatic and heterocyclic isocyanates with polyols to give isocyanate functional oligomers, which oligomers may be used alone or in combination with free isocyanate(s).

The term "anhydrous" is intended to mean herein that the applicable reaction mixture or component comprises less than 0.25 wt.% of water, based on the weight of the mixture or component. The term "essentially free of solvent" should be interpreted analogously as meaning the relevant composition comprises less than 0.25 wt.% of solvent.

As used herein, "gradient copolymers" refers to copolymers comprising polymer chains with a gradient of the distribution of the monomer building blocks along the chains. Preferably, one end of the chain is rich in building blocks that can be traced back to the first monomer, and the other is rich in building blocks that can be traced back to another monomer.

### DETAILED DESCRIPTION OF THE INVENTION

The polyether-polysiloxane copolymer of the invention has a number average molecular weight (Mₙ) of 500-50,000 g/mol, preferably from 3,000 to 50,000 g/mol, most preferably from 8,000 to 15,000 g/mol; a polydispersity index of 1.0-2.0, preferably from 1.0 to 1.8, most preferably from 1.15 to 1.4; and an unsaturation value of less than 0,02 meq/g, preferably of at most 0.010 meq/g, most preferably of at most 0.007 meq/g; and preferably a hydroxyl number of from 10 to 80 mg KOH/g.

Besides, the polyether-polysiloxane copolymer of the invention is a gradient copolymer. The polyether-polysiloxane copolymer of the invention preferably comprises f₁ of polyether repeating units and f₂ of polysiloxane repeating units, wherein f₁ is the weight fraction of polyether repeating units in the copolymer and f₂ is the weight fraction of polysiloxane repeating units in the copolymer. The polyether-polysiloxane copolymer of the invention preferably comprises a first polymer chain with a first section having a higher fraction of polyether repeating units fg₁₁ than f₁ and a lower fraction of polysiloxane repeating units fg₁₂ than f₂, wherein fg₁₁ is the weight fraction of polyether repeating units in said first section of the first polymer chain and fg₁₂ is the weight fraction of polysiloxane repeating units in said first section of the first polymer chain. Further, said first polymer chain preferably comprises a second section having a lower fraction of polyether repeating units fg₂₁ than fg₁₁ and a higher fraction of polysiloxane repeating units fg₂₂ than f₁₂, wherein fg₂₁ is the weight fraction of polyether repeating units in the second section of the first polymer chain and fg₂₂ is the weight fraction of polysiloxane repeating units in the second section of the first polymer chain. In addition, said first polymer chain preferably comprises a third section having a lower fraction of polyether repeating units fg₃₁ than fg₁₁, but higher than fg₂₁ and a higher fraction of polysiloxane repeating units fg₃₂ than f₁₂, but lower than fg₂₂, wherein fg₃₁ is the weight fraction of polyether repeating units in the third section of the first polymer chain and fg₃₂ is the weight fraction of polysiloxane repeating units in the third section of the first polymer chain.

On the other hand, said first section of the first polymer chain, said second section of the first polymer chain and said third section of the first polymer chain preferably comprise polyether repeating units and polysiloxane repeating units.

Preferably, fg₁₁ > 1,1*f₁, more preferably fg₁₁ > 1,5*f₁, most preferably fg₁₁ > 2*f₁; and/or 1,1*fg₁₂ < f₂, more preferably 1,5*fg₁₂ < f₂, most preferably 2*fg₁₂ < 2*f₂

The polyether-polysiloxane copolymer of the invention preferably comprises at least 10 wt.%, more preferably at least 25wt.%, still more preferably at least 50wt.%, most preferably at least 75wt.% of said first polymer chains.

The content of the components of the copolymer is not limited and can be adapted to needs of the application. However, the copolymer preferably comprises 1wt.% to 99wt.%, more preferably 15wt.% to 85wt.%, still more preferably >50wt.% to 75wt.%, most preferably 60wt.-% to 70wt.% of polyether repeating units, wherein polyalkylene oxide repeating units, especially polyethylene oxide repeating units and polypropylene oxide repeating units, in particular polypropylene oxide repeating units, are preferred. On the other hand, the copolymer preferably comprises 1wt.% to 99wt.%, more preferably 10wt.% to 75wt.%, still more preferably 25wt.% to <50wt.%, most preferably 30wt.-% to 40wt.% of polysiloxane repeating units, wherein polydialkylsiloxane repeating units, especially poly-C₁-C₄-alkylsiloxane repeating units, in particular polydimethylsiloxane repeating units, are preferred.

The copolymer preferably comprises a functional group, especially a hydroxyl group, more preferably an alkyl hydroxyl group or a hydroxyl group bonded to a silicon, which allows for easy bonding of the copolymers to other components, especially to other polymers, e.g., by polymer reaction.

Said hydroxyl group is preferably bonded to at least one terminal end of the copolymer, most preferably to at least two terminal ends of the copolymer.

The copolymers of the invention are preferably obtainable by use of a Double Metal Cyanide (DMC) catalyst. Preferably, a mixture of at least one alkylene oxide and at least one siloxane is polymerized in the presence of a Double Metal Cyanide (DMC) catalyst.

For the purpose of the present invention, a catalyst system is preferably used, which makes effective reaction control possible with high Turn-over Frequencies (TOF) and/ or Turn-over Numbers (TON) in the production of epoxides and siloxanes and optionally other monomers.

Particularly preferred catalysts for catalyzing the polymerization of epoxides and siloxanes are obtainable by mixing
a) at least one double metal cyanide compound,
b) at least one organic complexing agent and
c) at least one primary alcohol with 6 to 24 C atoms.

The organic complexing agent and the primary alcohol with 6 to 24 C atoms are different compounds. The organic complexing agent is therefore preferably not a primary alcohol with 6 to 24 C atoms.

The term "polymerization of epoxides and siloxanes" within the meaning of the present invention encompasses the polymerization of one kind of epoxide and the copolymerization of several epoxides and one or more siloxane(s) and the copolymerization of one or more epoxide(s), one or more siloxane(s) with further monomers, such as carbon dioxide. A preferred catalyst displays excellent catalytic activity in the polymerization of epoxide(s) and siloxane(s) and therefore makes possible an efficient and economical method for producing corresponding copolymers.

"Epoxides" are understood to be organic compounds that contain at least one epoxide group. Epoxides for reaction within the meaning of the present invention are e.g. ethylene oxide, 1,2-propylene oxide, epichlorohydrin, 1,2-butylene oxide, 1,2-pentylene oxide, isopentylene oxide, 1,2-hexylene oxide, 1,2-heptylene oxide, methyl glycidyl ether, ethyl glycidyl ether, allyl glycidyl ether, phenyl glycidyl ether, butadiene monoxide, isoprene monoxide, tolyl glycidyl ether, cyclohexene oxide, cyclooctane epoxide, cyclododecane epoxide, (+)-cis-limonene oxide, (+)-cis,trans-limonene oxide and (-)-cis,trans-limonene oxide, with ethylene oxide, 1,2-propylene oxide, cyclohexene oxide, cyclooctane epoxide, cyclododecane epoxide, (+)-cis-limonene oxide, (+)-cis,trans-limonene oxide and (-)-cis,trans-limonene oxide being particularly preferred. In particular, 1,2-propylene oxide, which is generally also referred to simply as propylene oxide, is preferred.

The term "mixing" according to the invention encompasses bringing feedstocks into contact in such a way that these can undergo a chemical reaction with one another or enter into a physical interaction with one another, e.g., by forming a complex compound, which can also be referred to synonymously as a coordination compound.

A double metal cyanide compound is understood to be an inorganic compound that contains cyanide ions and a specific number of two different metal ions. These metal ions can differ in the metal itself or in its oxidation number. This means that either ions of two different metals are present or that they are ions of one and the same metal but are present in different oxidation states.

The double metal cyanide compound to be used in the present invention is preferably obtainable by mixing at least one salt of the general formula (1a)

m¹*_{d'}*X*_{g'}* (1a)

where M¹ is a Zn, Fe, Co, Mn, Cu, Sn, Pb or Ni ion, X is an anion and d' and g' are integers >0 and assume values such that the salt M¹*_{d'}*X*_{g'}* is electroneutral, with at least one complex of the general formula (Ib)

M⁴*_{h'}*[M²(CN)*_{e'}*]*_{f'}* (1b)

where M⁴ is an alkali metal ion, M² is a Co, Cr, Mn, Ir, Rh, Ru, V or Fe ion and h', e' and f are integers >0 and assume values such that the complex M⁴*_{h'}*[M²(CN)*_{e'}*]*_{f'}* is electroneutral.

M¹ is particularly preferably a Zn, Fe or Ni ion and most particularly preferably a Zn ion. M² is particularly preferably a Co or Fe ion and most particularly preferably a Co ion. M⁴ is particularly preferably a K ion. X is particularly preferably a halide ion and most particularly preferably a chloride ion. In particular, the double metal cyanide compound is obtainable by mixing ZnCl₂ with K₃(Co(CN)₆)₃.

An organic complexing agent is understood to be an organic compound that has a functional group acting as an electron donor and is therefore capable of occupying a coordination site on a metallic central atom or central ion. Within the meaning of the present invention, compounds that are suitable as organic complexing agents preferably also exhibit a certain solubility in water. Preferred complexing agents according to the invention encompass alcohols, aldehydes, ketones, ethers, esters, amides, urea derivatives, nitriles, sulfides and mixtures of two or more of the above-mentioned compounds. Particularly preferably, the organic complexing agent is selected from ethanol, i-propyl alcohol, n-butyl alcohol, i-butyl alcohol, sec-butyl alcohol, tert-butyl alcohol, monoglyme, diglyme, 1,4-dioxane, furan and mixtures of two or more of the above-mentioned compounds. Most particularly preferably, the organic complexing agent is tert-butyl alcohol or monoglyme.

A primary alcohol is understood to be an alcohol, the OH group of which is present as a -CH₂-OH group. The primary alcohol with 6 to 24 C atoms can be either a saturated or an unsaturated alcohol. The term "unsaturated alcohol" encompasses alcohols having one or more double or triple bond(s), it being possible also for the alcohol to contain a combination of double and triple bonds. The primary alcohol preferably contains 8 to 22 C atoms, particularly preferably 8 to 20 C atoms. Most particularly preferably, the primary alcohol is selected from n-octanol, n-decanol, n-dodecanol, 2-octyldodecanol and undecen-1-ol.

The catalyst preferably corresponds to the general formula (2)

M¹*_{d}*[M²(CN)*ₑ*]*_{f}***x*M³(X)*_{g}***y*H₂O**z*L**a*A (2)

where
M¹ is a Zn, Fe, Co, Ni, Mn, Cu, Sn or Pb ion,
M² is a Co, Fe, Cr, Mn, Ir, Rh, Ru or V ion,
M3 is a Zn, Fe, Co, Ni, Mn, Cu, Sn, Pb, Cr, Ir, Rh, Ru or V ion, X is an anion, L is an organic complexing agent and A is a primary alcohol with 6 to 24 C atoms,
d, e, f and g are integers >0 and assume values such that the complex M¹*_{d}*[M²(CN)*ₑ*]*_{f}**xM³(X)*_{g}* is electroneutral, and
0.1≤x≤5; 0.1≤y≤1; 0.1≤z≤1 and 0.01≤a≤5.

In the general formula (2), x, y, z and a are to be understood as representing the average molar proportion of the particular constituent, based on a (single) complex M¹*_{d}*(M²(CN)*ₑ*]*_{f}*. The integers d, e, f and g, on the other hand, have a stoichiometric meaning, which is limited to the complex M¹*_{d}*(M²(CN)*ₑ*]*_{f}**M³(X)*_{g}*, and represents a complete charge balance within this complex.

M¹ and M³, independently of one another, are preferably a Zn, Fe or Ni ion, and M¹ is preferably equal to M³. M² is preferably a Co or Fe ion. M¹ is particularly preferably a Zn ion and M² a Co ion. In particular, the complex M¹*_{d}*(M²(CN)*ₑ*]*_{f}* is preferably a zinc hexacyanocobaltate(III). X is preferably a halide ion, particularly preferably Cl⁻. With regard to the organic complexing agent L and the primary alcohol A, the above statements apply in respect of preferred representatives. The primary alcohol A can also be present in the general formula (2) in deprotonated form, i.e., as an alcoholate. The alcoholate is regarded as being encompassed by the term "alcohol" in this respect.

The total proportion by weight of the organic complexing agent(s) and of the primary alcohol(s) in the catalyst is preferably 15 to 50 wt.% and more preferably 20 to 40 wt.%, based on the total weight of the catalyst. The term "total proportion by weight" is understood to be the sum of the proportions by weight of the organic complexing agent(s) and of the primary alcohol(s).

The mixing of the components for producing the catalyst preferably takes place in water.

The present invention also provides a method for producing the catalyst, which encompasses mixing at least one salt of the general formula (Ia)

M¹_{*d*'}X_{*g*'} (1a)

where M¹ is a Zn, Fe, Co, Mn, Cu, Sn, Pb or Ni ion, X is an anion and d' and g' are integers >0 and assume values such that the salt M¹*_{d'}*X*_{g'}*, is electroneutral, with at least one complex of the general formula (Ib)

   M⁴*_{h'}*[M²(CN)*_{e'}*]*_{f'}* (1b)
where M⁴ is an alkali metal ion, M² is a Co, Cr, Mn, Ir, Rh, Ru, V or Fe ion and h', e' and f are integers >0 and assume values such that the complex M⁴*_{h'}*[M²(CN)*_{e'}*]*_{f'}* is electroneutral,
with at least one organic complexing agent L and at least one primary alcohol A with 6 to 24 C atoms in an aqueous dispersion,
separating off the resulting solid phase,
bringing the solid phase into contact at least once with an aqueous dispersion of L and A and isolating the reaction product obtained.

For the organic complexing agent L and the primary alcohol A as well as for M¹, M² and M⁴, the meanings and preferences stated above apply here.

Preferably, after the solid phase is separated from the aqueous dispersion, it is brought into contact at least twice, more preferably at least three times, with an aqueous dispersion of L and A. "Bringing into contact" here means that the feedstocks are brought together in a manner that allows a chemical reaction or a physical interaction to take place.

The present invention also provides a method for the polymerization of epoxide, wherein at least one epoxide is polymerized in the presence of at least one catalyst according to the invention. The term "polymerization" here encompasses the copolymerization of epoxide(s) and siloxane(s). The method is preferably a method for the copolymerization of at least one epoxide, at least one siloxane and carbon dioxide (CO₂). In this case, the polymerization takes place in the presence of carbon dioxide, which can be added to the reaction mixture in principle in solid, liquid or gaseous form. It is preferably metered in as a liquid or gas. A method of this type can be used, e.g., for the production of polycarbonate.

The molar ratio of substrate:catalyst within the framework of the present invention is preferably from 100:1 to 10,000,000:1 and more preferably from 1,000:1 to 5,000, 000:1.

The method according to the invention is preferably carried out at temperatures of 0 to 300°C., more preferably 25 to 200°C., particularly preferably 50 to 160°C. and in particular 60 to 140°C.

The method according to the invention is preferably carried out in the presence of at least one solvent. In this case, the solvent is preferably present at least in a quantity such that the epoxide(s) and the siloxane(s) to be polymerized are dispersed therein. The solvent is preferably a polar, OH-group-free compound. Suitable solvents are e.g. halogen-containing solvents, such as dichloromethane, trichloromethane, carbon tetrachloride, 1,1-dichloroethane, 1,2-dichloroethane; mono-and polyhalogenated alkanes and alkenes; aromatics, such as toluene; xylene or the mono- or polyhalogenated derivatives thereof, such as bromotoluene, chlorotoluene, dichlorotoluene, chlorobenzene; ethers, such as diethyl ether, dipropyl ether, cyclic ethers, such as tetrahydrofuran and dioxane; nitriles, such as e.g. acetonitrile and acrylonitrile; ketones, such as e.g. acetone and butanone, mono- and diaryl ketones; cycloalkenes and cycloalkenes; esters, such as ethyl acetate, and mixtures of two or more of the above-mentioned solvents. The solvent is preferably selected from nitriles, esters and halogenated hydrocarbons, in particular from dichloromethane, trichloromethane, bromotoluene, chlorotoluene, dichlorotoluene, chlorobenzene, acetonitrile, acrylonitrile and ethyl acetate. The solvent is particularly preferably selected from dichloromethane, trichloromethane, acetonitrile and ethyl acetate, and the solvent is most particularly preferably dichloromethane. The water content of the solvent(s) used is preferably less than 0.05 vol. %, based on the total volume of the solvent(s) used.

The present invention also provides the use of said catalyst for the copolymerization of at least one epoxide and at least siloxane. Preferred according to the invention is the use of said catalyst for the copolymerization of at least one epoxide and at least one siloxane with carbon dioxide.

Preferably a supported DMC catalyst is used in that context.

According to a preferred embodiment of the claimed invention, the supported catalyst is most broadly defined in accordance with Formula (I):

[DMCC] * b Supp (I)

wherein
[DMCC] denotes a double metal cyanide complex which comprises a double metal cyanide (DMC) compound, at least one organic complexing agent and a metal salt;
Supp denotes the hydrophobic support material; and,
b represents the average proportion by weight of said support material, based on the total weight of [DMCC] and Supp, and is preferably in the range 1 wt.% ≤ b ≤ 99 wt.%, more preferably in the range 10 wt.% ≤ b ≤ 70 wt.%,
wherein the hydrophobic support material is selected from the group consisting of hydrophobic materials characterized by a methanol wettability value of at least 30 vol.%, as determined by the methanol wettability test as described in the description; carbonaceous inorganic solid materials; or inorganic solid materials which are isoelectronic with carbon.

The average proportion by weight of the hydrophobic support material is preferably in the range 1 wt.% ≤ b ≤ 99 wt.%, more preferably in the range 10 wt.% ≤ b ≤ 70 wt.% based on the total weight of [DMCC] and Supp. In particularly preferred embodiments, the average proportion of the support material is in the range of 20 wt.% ≤ b ≤ 70 wt.%, more preferably in the range 30 wt.% ≤ b ≤ 70 wt.%, based on the total weight of [DMCC] and Supp.

Higher catalytic activity can be achieved by using a hydrophobic support material.

In a preliminary embodiment, said double metal cyanide complex [DMCC] is represented by the general Formula (II-A)

M¹_{d}[M²(CN)ₑ]_{f} * xM³(X)_{g} *yH₂O * ωL (II-A)

wherein:
M¹ is a Zn, Fe, Co, Ni, Mn, Cu, Sn or Pb ion;
M² is a Fe, Co, Mn, Cr, Ir, Rh, Ru or V ion;
M³ is a Zn, Fe, Co, Ni, Mn, Cu, Sn, Pb, Cr, Ir, Rh, Ru or V ion;
X is an anion;
L is an organic complexing agent;
d, e, f and g are each integers > 0 but have values such that the complex M¹_{d}[M²(CN)ₑ]_{f} * xM³(X)_{g} is electrically neutral;
0.1 ≤ x ≤ 5;
0.1 ≤ y ≤ 1; and,
0.0001 ≤ ω ≤ 6.

In a further embodiment, the aforementioned double metal cyanide complex [DMCC] is represented by the general Formula (II):

M¹_{d}[M²(CN)ₑ]_{f} * xM³(X)_{g} *yH₂O * zL¹ * aL² (II)

wherein:
M¹ is a Zn, Fe, Co, Ni, Mn, Cu, Sn or Pb ion;
M² is a Fe, Co, Mn, Cr, Ir, Rh, Ru or V ion;
M³ is a Zn, Fe, Co, Ni, Mn, Cu, Sn, Pb, Cr, Ir, Rh, Ru or V ion;
X is an anion;
L¹ and L² are distinct from one another and represent respectively first and second organic complexing agents;
d, e, f and g are each integers > 0 but have values such that the complex M¹_{d}[M²(CN)ₑ]_{f} * xM³(X)_{g} is electrically neutral;
0.1 ≤ x ≤ 5;
0.1 ≤ y ≤ 1;
0.0001 ≤ z ≤ 1; and,
0.0001 ≤ a ≤ 5.

For completeness, said first (L¹) and second (L²) organic complexing agents are distinct from one another.

In general formulae (II) and (II-A), x, y, ω, z and a are to be understood as representing the average molar proportion of the particular constituent, based on a (single) complex M¹_{d}[M²(CN)ₑ]_{f}. The integers d, e, f and g, on the other hand, have a stoichiometric meaning, which is limited to the complex M¹_{d}[M²(CN)ₑ]_{f} * M³(X)_{g} and represents a complete charge balance within this complex.

X in general Formulae (II) and (II-A) is preferably an anion selected from the group consisting of halide, hydroxide, sulphate, hydrogensulphate, carbonate, hydrogencarbonate, cyanide, thiocyanide, isocyanate, cyanate, carboxylate, nitrate, nitrite, borate and antimonite.

Good results have been obtained for that embodiment wherein said double metal cyanide complex [DMCC] is represented by Formula (II-A) and further meets at least one of the following conditions:

M¹ is equal to M³;

X is an anion selected from the group consisting of halide, hydroxide, sulphate, carbonate, cyanide, thiocyanide, carboxylate, nitrate, borate and antimonite; and,
L is selected from the group consisting of aliphatic C₁ to C₂₄ alcohols, monoglyme, diglyme, 1,4-dioxane, furan, polypropyleneglycol (PPG) homopolymers, polypropyleneglycol (PPG) copolymers and mixtures of two or more thereof.

Equally, good results have been obtained for that embodiment where said double metal cyanide complex [DMCC] of Formula (II) meets at least one of the following conditions:

M¹ is equal to M³;

X is an anion selected from the group consisting of halide, hydroxide, sulphate, carbonate, cyanide, thiocyanide, carboxylate, nitrate, borate and antimonite; and,
L¹ and L² are independently selected from the group consisting of aliphatic C₁ to C₂₄ alcohols, monoglyme, diglyme, 1,4-dioxane, furan, polypropyleneglycol (PPG) homopolymers, polypropyleneglycol (PPG) copolymers and mixtures of two or more thereof.

For completeness, it is noted that these conditions i) to iii) - as they apply to Formulae (II) and (II-A) - are not mutually exclusive and a double metal cyanide catalyst for use in the present invention may meet any permutation of these conditions. In particular, the double metal cyanide complex [DMCC] may meet two or desirably three of the aforementioned conditions i) to iii).

The alcohol of these embodiments (L, L¹, L²) may either be a saturated or an unsaturated alcohol, the latter "unsaturated alcohol" term encompassing alcohols having: one or more double bond; one or more triple bond; or, a combination of double and triple bonds. Herein, the alcohol (L, L¹, L²) desirably contains from 2 to 12 carbon atoms and more particularly from 2 to 10 carbon atoms.

The polypropyleneglycol (PPG) homopolymers, polypropyleneglycol (PPG) copolymers are desirably characterized by a weight average molecular weight (Mw) of from 500 to 2,000. As an alternative or supplementary characterization to this molecular weight limitation, said polypropyleneglycol (PPG) copolymers should desirably be either block or random copolymers of ethylene oxide and propylene oxide: exemplary commercial block copolymers include those manufactured under the Pluronics^{®} trade name by BASF.

In accordance with the preferred defined conditions, an exemplary double metal cyanide complex [DMCC] of Formula (II-A) may meet at least one of the following conditions:

M¹ is equal to M³;

X is an anion selected from the group consisting of halide, hydroxide, sulphate, carbonate, cyanide, thiocyanide, carboxylate, nitrate, borate and antimonite; and,
L is selected from the group consisting of ethanol, i-propyl alcohol, n-butyl alcohol, i-butyl alcohol, sec-butyl alcohol, tert-butyl alcohol, n-octanol, n-decanol, n-dodecanol, 2-octyldodecanol, undecen-1-ol, polypropyleneglycol (PPG) homopolymers, polypropyleneglycol (PPG) copolymers and mixtures of two or more thereof; wherein said polyproyleneglycol homo- or copolymers are characterized by a weight average molecular weight (Mw) of from 500 to 2,000.

In accordance with the preferred defined conditions, an exemplary double metal cyanide complex [DMCC] of Formula (II) may meet at least one of the following conditions:

M¹ is equal to M³;

X is an anion selected from the group consisting of halide, hydroxide, sulphate, carbonate, cyanide, thiocyanide, carboxylate, nitrate, borate and antimonite; and,
L¹ and L² are independently selected from the group consisting of ethanol, i-propyl alcohol, n-butyl alcohol, i-butyl alcohol, sec-butyl alcohol, tert-butyl alcohol, n-octanol, n-decanol, n-dodecanol, 2-octyldodecanol, undecen-1-ol, polypropyleneglycol (PPG) homopolymers, polypropyleneglycol (PPG) copolymers and mixtures of two or more thereof; wherein said polyproyleneglycol homo- or copolymers are characterized by a weight average molecular weight (Mw) of from 500 to 2,000.

A particular preference may also be acknowledged for double metal cyanide complex [DMCC] of Formula (II-A) in which: (iii) L is tert-butyl alcohol or a polypropyleneglycol (PPG) homopolymer having a weight average molecular weight (Mw) of from 500 to 2,000, more preferably tert-butyl alcohol. Additionally or independently, a preference may also be acknowledged for double metal cyanide complexes of Formula (II-A) which meet at least one of the following conditions: i) M¹ is equal to M³ and is Zn; M² is Co; and, ii) X is a halide.

A particular preference may also be acknowledged for double metal cyanide complex [DMCC] of Formula (II) in which: (iii) L¹ is tert-butyl alcohol; and, L² is n-octanol, n-decanol, n-dodecanol, 2-octyldodecanol, undecen-1-ol or a polypropyleneglycol (PPG) homopolymer having a weight average molecular weight (Mw) of from 500 to 2,000. Additionally or independently, a preference may also be acknowledged for double metal cyanide complexes of Formula (II) which meet at least one of the following conditions: i) M¹ is equal to M³ and is Zn; M² is Co; and, ii) X is a halide.

As noted herein above, the catalysts of the present invention preferably comprise a hydrophobic support material (Supp). The hydrophobic support material is preferably selected from the group consisting of:
hydrophobic support material characterized by a methanol wettability value of at least 30 vol.%, preferably from 30 to 80 vol.%, more preferably from 30 to 70 vol.%, as determined by the methanol wettability test as described herein;
carbonaceous inorganic solid materials, preferably activated charcoal, carbon black, carbon nanotubes, fullerene, or graphene; or
inorganic solid materials which are isoelectronic with carbon, preferably boron nitride.

According to preferred embodiments, the hydrophobic support material (Supp) which is characterized by a methanol wettability value of at least 30 vol.%, preferably from 30 to 80 vol.%, more preferably from 30 to 70 vol.%, is selected from the group consisting of hydrophobically modified inorganic oxides or hydroxides, hydrophobically modified calcium carbonate, and clay.

The hydrophobically modified inorganic oxides or hydroxides include, without limitation, silicon oxides or hydroxides, aluminum oxides or hydroxides, titanium oxides or hydroxides, zirconium oxides or hydroxides, magnesium oxides or hydroxides, or mixed oxides or hydroxides thereof, or mixtures thereof. In particular, the hydrophobically modified inorganic oxides or hydroxides are selected from hydrophobically modified silica, silicon hydroxide, aluminum oxide, aluminum hydroxide, aluminum silicate, titanium dioxide, titanium silicate, zirconium dioxide, zirconium silicate, or magnesium silicate. More preferably, said hydrophobically modified inorganic oxides or hydroxides comprise or consist of hydrophobic silica or, more particularly, comprise or consist of hydrophobic fumed silica or precipitated nano-scaled silica, most preferably hydrophobic fumed silica.

Said hydrophobically modified inorganic oxides or hydroxides can have a BET surface area of from 50 to 1,000 m²/g, preferably from 100 to 600 m²/g, more preferably from 100 to 400 m²/g.

The hydrophobically modified inorganic oxides or hydroxides are preferably obtainable by functionalization with one or more hydrophobic groups using methods known in the art: in this regard, reference may be made inter alia to US Patent No. 6,344,240. Any suitable reagent can be used for forming the hydrophobic groups including, for example: silanes, preferably organosilazanes, such as hexamethyldisilazane (HMDZ); organosiloxanes, such as hexamethyldisiloxane (HMDS), hexamethylcyclotrisiloxane (D3), octamethylcyclotetrasiloxane (D4), decamethylcyclopentasiloxane (D5) and dodecamethylcyclohexasiloxane (D6); organohalosilanes, such as trimethylchlorosilane (TMCS); alkoxysilanes such as dimethoxydimethylsilane; or oleochemical derivatives such as fatty acids, preferably with 12 to 22 carbon atoms, and fatty alcohols, preferably with 12 to 22 carbon atoms. Preferably, the hydrophobic groups formed on the inorganic oxide and/or hydroxide are organosiloxanes. Moreover, the hydrophobic groups are preferably bound to the inorganic oxide and/or hydroxide through oxygen atoms.

The following commercially available hydrophobically modified inorganic oxides may in particular be useful: CAB-O-SIL^{®} TS-530, CAB-O-SIL^{®} TS-610 and, CAB-O-SIL^{®} TS-720 treated fumed silica products available from Cabot Corporation (Mass., USA); HDK^{®} H20 (available from Wacker Chemie AG); and, Aerosil^{®} R104 (available from Evonik Industries).

In another preferred embodiment of the invention, the hydrophobic support material (Supp) is selected from carbonaceous inorganic solid materials, preferably activated charcoal, carbon black, carbon nanotubes, fullerene, or graphene, or inorganic solid materials which are isoelectronic with carbon, preferably boron nitride.

In preferred embodiments, the hydrophobic support material (Supp) is selected from the group consisting of hydrophobically modified silica, preferably hydrophobic fumed silica, hydrophobically modified calcium carbonate, activated charcoal, carbon black, and graphene.

In preferred embodiments, the catalyst composition of the invention contains at least 25 g, preferably at least 50 g and more preferably at least 100 g of hydrophobic support material per 100g of the unsupported complex. Further, in preferred embodiments, the catalyst composition contains a maximum of 5,000 g, more usually a maximum of 4,000g or even 3,000g of hydrophobic support material per 100g of the unsupported complex. For instance, the catalyst composition may viably contain from 100 to 1,000g or from 250 to 750 g of hydrophobic support material per 100g of the unsupported complex.

Broadly, the supported catalyst of Formula (I) above is obtainable or is obtained by mixing: at least one organic complexing agent; said hydrophobic support (Supp); and at least one double metal cyanide compound.

The supported catalyst according to the present invention can have an average particle size of from 300 nm to 2,500 nm, preferably 500 nm to 2,000 nm, more preferably 700 nm to 1,650 nm, in particular 800 nm to 1,500 nm, as determined by light scattering method. The size distribution of catalyst particles is measured by means of photon correlation spectroscopy with Zetasizer Nano ZS90 (MALVERN Instruments Ltd., UK) according to DIN ISO 13321. Photon Correlation Spectroscopy (PCS) is a dynamic scattered light method used to determine the mean hydrodynamic particle diameter and polydispersity index as a measure of the width of the distribution. Calibration of the PCS size measurement is performed according to DIN EN ISO 13485 according to specified procedures using Nanosphere^{®} size standards from Duke Scientific Corp., USA. The volume-average particle size of catalyst particles is based on values obtained by measuring catalyst particles dispersed in methanol by means of a light scattering method.

More particularly, the method for producing the supported catalyst of Formula (I) as defined herein comprises the steps of
mixing in an aqueous medium
a) at least one complexing agent, i.e., a complexing agent (L) or at least two organic complexing agents (L¹, L²), as applicable;
b) the hydrophobic support (Supp);
c) at least one salt of the general formula (Ila);

   M¹_{d}X_{g} (Ila)

   where M¹ is a Zn, Fe, Co, Mn, Cu, Sn, Pb or Ni ion, X is an anion, preferably halide, and d and g are integers > 0 and assume values such that the salt M¹_{d}X_{g} is electroneutral; and,
d) at least one complex of the general formula (Ilb)

   M³ₕ[M²(CN)ₑ]_{f} (IIb)

   where M³ is an alkali metal ion, preferably potassium, M² is a Co, Cr, Mn, Ir, Rh, Ru, V or Fe ion and h, e and f are integers > 0 and assume values such that the complex M³ₕ[M²(CN)ₑ]_{f} is electroneutral;
   washing the obtained catalyst with an aqueous solution;
   drying the washed catalyst.

The mixing operation yields an aqueous suspension comprising the precipitated [DMCC] catalytic complex. The suspension may then be subjected to solid-liquid separation and the obtained solid subjected to at least one purification step.

In an important embodiment of this method, M³ is potassium and X is halide. In addition, it is preferred that the total molar amount of the salt(s) of Formula (Ila) to be mixed is in excess of the total molar amount of the complex(es) of Formula (IIb): a stoichiometric excess of the salt(s) of Formula (Ila) of at least 40 mol.% or at least 50 mol.%, based on the molar amount of the complex(es) of Formula (IIb) may be mentioned as desirable.

There is no particular intention to limit what is meant by the term mixing in the context of this method: it is intended to encompass any means of bringing the given feedstocks [a) to d)] into contact in such a way that these can undergo a chemical reaction with one another or enter into a physical interaction with one another. Desirably, the mixing will be performed under the high shear forces generated by, for instance, vigorous stirring, rotor-stator mixers or by dispersion through one or more flat jet nozzles, Levos nozzles, Bosch nozzles and the like. The specific mixing method employed should, however, suppress the formation of foam during the mixing operation.

In that mixing operation, it is considered that the organic complexing agents (L, L¹, L²) may be: added within an aqueous solution of the metal salt (Ila); added within an aqueous solution of the metal cyanide salt (Ilb); and/or, added directly to the suspension after precipitation of the [DMCC] catalytic complex.

After the mixing step, the supported catalyst is then isolated from the suspension by centrifugation, filtration or analogous known techniques. The so-isolated catalyst is washed at least once with an aqueous solution of the selected organic complexing agent(s) to remove water soluble by-products: the or each washing step can feasibly include the re-suspension of the catalyst and the renewed isolation of that solid by, for instance, filtration or centrifugation. The amount of organic complexing agent(s) in each aqueous wash solution should in toto be from 40 to 80 wt.%, based on the total weight of aqueous wash solution.

Subsequent to the aqueous washing steps, the isolated catalyst may optionally be treated with a nonaqueous wash solution comprising said organic complexing agent(s). The washed catalyst is then dried, optionally after pulverization, at a temperature of from 20 to 100°C and under a reduced pressure of, for instance, from 0.1 to 1,013 mbar.

According to another embodiment of the invention, the method for producing the supported catalyst comprises the steps of i) mixing in an aqueous medium a) at least one complexing agent, i.e., a complexing agent (L) or at least two organic complexing agents (L¹, L²), as applicable; c) at least one salt of the general formula M1dXg (Ila) as defined herein; and d) at least one complex of the general formula M³ₕ[M²(CN)ₑ]_{f} (Ilb) as defined herein, ii) washing the obtained catalyst with an aqueous solution, iii) drying the washed catalyst, wherein b) said hydrophobic support (Supp) is added to the obtained catalyst during or after the purification, for example before or during the washing step ii) or after the drying step iii), preferably after the drying step iii). In case the hydrophobic support (Supp) is added during the washing step, the obtained supported catalyst is then dried, for example by spray drying or belt drying, at a temperature of from 20 to 100°C. In case the hydrophobic support (Supp) is added after the drying step, the mixture of the dried DMCC and the hydrophobic support (Supp) is carefully pulverized under friction forces using a conventional grinding machine such as a pebble mill, a colloid mill, or a mortar grinder.

As noted above, the present invention also entails the use of the above defined, preferably supported double metal cyanide complexes as catalysts for the polymerization of a mixture of at least one alkylene oxide and at least one siloxane. For completeness, this polymerization is intended to encompass: the polymerization of a mixture of at least one alkylene oxide and at least one siloxane; the copolymerization of said mixture with other epoxide monomers; and the copolymerization said mixture of at least one alkylene oxide and at least one siloxane with a non-epoxide, cyclic monomer and/or carbon dioxide. The above defined preferably supported double metal cyanide catalysts thereby enable the efficient and economical synthesis of polyether-polysiloxane copolymers, which optionally also comprises further repeating units.

In a particular embodiment of these recited uses, there is provided a method for producing a functionalized copolymer, said method comprising the steps of:
a) providing an initiator, said initiator comprising or consisting of an active hydrogen-containing compound capable of alkoxylation by an epoxide compound;
b) providing a preferably supported catalyst as defined herein above; and,
in the presence of said initiator and said preferably supported catalyst, performing a ring opening copolymerization of said mixture comprising at least one alkylene oxide and at least one siloxane and optional other monomers.

In any of the aforementioned polymerization processes, the amount of preferably supported catalytic complex employed should be sufficient to provide a reasonable polymerization rate but it should be minded such catalysts are expensive and using lower amounts thereof can obviate the need to remove catalyst residues from the product. Without intention to limit the present invention, effective polymerizations have been conducted where the amount of the preferably supported catalytic complex [DMC] or [DMCC] is from 10 ppm to 5,000 ppm, in particular from 50 to 500 ppm, based on the weight of the copolymer product.

Without intention to limit the polymerization processes of present invention, alkylene oxide preferably comprise monoepoxide monomers. Illustrative monoepoxide monomers include: alkylene oxides; epoxy-substituted cycloaliphatic hydrocarbons, such as cyclohexene oxide, vinylcyclohexene monoxide, (+)-cis-limonene oxide, (+)-cis, trans-limonene oxide, (-)-cis, trans-limonene oxide, cyclooctene oxide, cyclododecene oxide and α-pinene oxide.

In an important embodiment, the monoepoxide monomer conforms to Formula (III) herein below: 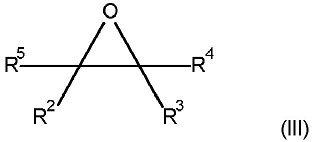 wherein:
R², R³, R⁴ and R⁵ may be the same or different and are independently selected from hydrogen, a halogen atom, a C₁-C₈ alkyl group, a C₃ to C₁₀ cycloalkyl group, a C₂-C₁₂ alkenyl, a C₆-C₁₈ aryl group or a C₇-C₁₈ aralkyl group, with the proviso that at least one of R₃ and R₄ is not hydrogen.

It is preferred that R², R³ and R⁵ are hydrogen and R⁴ is a C¹-C⁸ alkyl group and, more preferably, a C¹-C⁴ alkyl group.

Having regard to this embodiment, exemplary monoepoxides include: ethylene oxide; 1,2-propylene oxide (propylene oxide); 1,2-butylene oxide; cis-2,3-epoxybutane; trans-2,3-epoxybutane; 1,2-epoxypentane; 1,2-epoxyhexane; 1,2-heptylene oxide; decene oxide; butadiene oxide; isoprene oxide.

In the present invention, preference is given to using at least one monoepoxide monomer selected from the group consisting of: ethylene oxide; propylene oxide; cyclohexene oxide; (+)-cis-limonene oxide; (+)-cis,trans-limonene oxide; (-)-cis,trans-limonene oxide; cyclooctene oxide; and cyclododecene oxide. It is particularly preferred if propylene oxide is used as a monomer: this statement of particular preference is intended to encompass said propylene oxide being either one of the epoxide monomers subjected to polymerization or the sole epoxide monomer.

As siloxanes, cyclic siloxanes are particularly preferred, which preferably having the general Formula (XI) as described herein below: 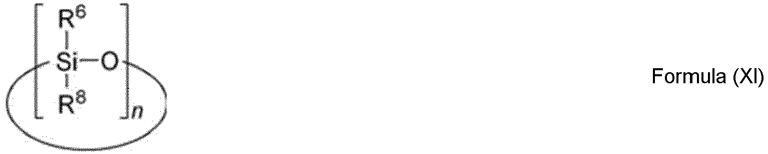
wherein: n is 3, 4, 5, 6, 7 or 8, preferably 4;
R⁶ and R⁸ may the same or different and each is independently selected from a C₁-C₈ alkyl group, a C₃-C₁₀ cycloalkyl group, a C₆-C₁₈ aryl group or a C₆-C₁₈ aralkyl group.

For completeness, the use of mixtures of copolymerizable cyclic siloxane monomers is envisaged in the present invention. Further, whilst suitable cyclic siloxane monomers will generally contain "n" identical R⁶ groups and "n" identical R⁸ groups, the R⁶ and R⁸ groups attached to a given silicon atom need not necessarily be the same as those attached to an adjacent silicon atom. For example, the monomers [(C₂H₅)(C₆H₅)SiO]₂[(C₂H₅)₂SiO] and [(C₂H₅)(C₆H₅)SiO][(C₂H₅)₂)SiO]₂ are considered monomers within the terms of Formula (XI).

In an embodiment, each R⁶ and R⁸ may independently represent a C₁-C₈ alkyl group. An exemplary, but not limiting list of cyclic siloxanes of meeting this embodiment includes: [(CH₃)₂SiO]₈; [CH₃)₂SiO]₇; [(CH₃)₂SiO]₆; decamethylcyclopentasiloxane (D5); octamethylcyclotetrasiloxane (D4); hexamethylcyclotrisiloxane (D3);[(CH₃)(C₂H₅)SiO]₃; [(CH₃)(C₂H₅)SiO]₄; [(CH₃)(C₂H₅)SiO]₅; [(CH₃)(C₂H₅)SiO]₆; [(C₂H₅)₂SiO]₃; [(C₂H₅)₂SiO]₄; and, [(C₂H₅)₂SiO]₅. More particularly, it is preferred that R⁶ and R⁸ of the cyclic siloxanes of Formula (XI) are both methyl (C₁). Good results have, for instance, been obtained when the cyclic siloxane of Formula (XI) is hexamethylcyclotrisiloxane (D3) or octamethylcyclotetrasiloxane (D4).

Whilst it is does not represent a preferred embodiment, the present invention does not preclude the epoxide monomer(s) and the siloxane(s) being copolymerized with one or more cyclic monomers selected from the group consisting of: oxetanes; cyclic carbonates; cyclic anhydrides; and lactones. The disclosures of the following citations may be instructive in disclosing suitable cyclic carbonate functional compounds: US Patent No. 3,535,342; US Patent No. 4,835,289; US Patent No. 4,892,954; UK Patent No. GB-A-1,485,925; and EP-A-0 119 840. However, such cyclic co-monomers preferably constitute less than 20 wt.%, preferably less than 10 wt.% or less than 5 wt.%, based on the total weight of the monomers.

### Polymerization Processes

Whilst there is certainly no intention to preclude either batch-wise or continuous performance of the polymerization - as described in US Patent Nos. 5,777,177 and 5,689,012 - the polymerization reactions are most suitably performed as semi-batch processes.

The polymerization reaction can be performed in any type of vessel that is suitable for the pressures and temperatures described below. In the preferred semi-batch process, the vessel should have one or more inlets through which at least the epoxide monomer(s) and/or the siloxane can be introduced during the reaction. A modified semi-batch process, so-called continuous addition of starter (CAOS) system, in which starter such as polypropylene glycol or dipropylene glycol is added continuously and simultaneously with epoxide and the siloxane monomer(s) can be used. In the less desired continuous process, a reactor vessel should contain at least one outlet through which a portion of the partially polymerized reaction mixture could be withdrawn. That aside, exemplary vessels for continuous or semi-batch operations include but are not limited to: tubular reactors; loop reactors; and continuous stirred tank reactors (CTSR). Any reactor should, of course, be equipped with a means for providing or removing heat so that the temperature of the polymerization mixture can be maintained within the desired range: there is no intention to limit such means, but examples include jacketing for thermal fluids and internal and/or external heaters.

At the start of the polymerization process, the supported catalyst, initiator and, optionally, a Lewis acid are charged into the reaction vessel. As is known in the art, the initiator is an active hydrogen-containing compound capable of alkoxylation by epoxide and addition of siloxane in the presence of said supported catalyst: the initiator is selected based on the desired functionality and molecular weight of the polyether-polysiloxane product. Conventionally, the initiator will be oligomeric or polymeric in character and have a number average molecular weight (Mₙ) in the range from 100 to 10,000 and a functionality (number of active hydrogens per molecule) of from 2 to 8. Diols and higher functionality polyols are particularly preferred for use as initiators.

In the preferred semi-batch process, the supported catalyst complex may undergo a preliminary heating step, in the absence of epoxide and the siloxane monomer(s), at a temperature of from 50 to 220°C, for instance from 75 to 180°C. That preliminary heating step is conducted in an inert atmosphere and is typically but, not necessarily, conducted under sub-atmospheric pressure. The preliminary heating is, moreover, usually conducted for a period of at least 10 minutes: a period of from 10 to 30 minutes might be mentioned for illustrative purposes.

After this preliminary heating, the temperature of the vessel is, if necessary, adjusted to the polymerization temperature and a portion of the epoxide monomer and, if applicable, a fraction of the carbon dioxide is introduced. When the preferably supported catalyst complex [DMC] or [DMCC] has become activated - typically indicated by a drop of internal reactor pressure - further monomer is fed into the reactor under the polymerization conditions discussed herein below.

Whilst additional preferably supported catalyst may certainly be added during the course of the monomer, carbon dioxide or reactant addition, it is conventional in a semi-batch process for the entire amount of catalyst to be added at the start of the process. Moreover, although it is highly desirable to have the Lewis acid present during initiation (catalyst activation), it is also conceivable for the Lewis acid to be added after initiation. Additional portions of Lewis acid may also be introduced as the polymerization progresses, that is during the addition of the epoxide(s) and/or siloxane(s).

The copolymer product obtained in the described synthesis steps will commonly contain in toto up to 1% by weight, based on the weight of said product, of: un-reacted epoxide(s) or siloxane monomers; organic impurities; and, water. Volatile impurities and moisture should be flashed or stripped from the copolymer product. The copolymer products also contain Lewis acids and catalyst residues: whilst it is typical to leave these residues in the product - since they are not expected to interfere with the performance of the polymers in many end-use applications, particularly if present at relatively low levels - they may conversely be removed if desired using separation and purification methods known in the art: mention in this regard may be made of adsorption, ion-exchange, extraction, re-precipitation, evaporation and chromatography. Where it is intended that the (optionally purified) reaction product be stored upon production, the polymers should be disposed in a vessel with an airtight and moisture-tight seal.

### Polymerization of Epoxides and Siloxanes without CO₂

The copolymerization of all monomers, especially of the epoxide monomer(s) and the siloxane monomer(s), the copolymerization of two or more epoxide monomers and siloxane monomer(s), and the copolymerization of epoxide monomer(s) and siloxane monomer(s) with further preferably cyclic monomers should be performed under anhydrous conditions and in the absence of any compound having an active hydrogen atom, save for the deliberate inclusion of the initiating compound. Exposure to atmospheric moisture may be avoided by providing the reaction vessel with an inert, dry gaseous blanket. Whilst dry nitrogen, helium and argon may be used as blanket gases, precaution should be used when common nitrogen gases are used as a blanket, because such nitrogen may not be dry enough on account of its susceptibility to moisture entrainment; the nitrogen may require an additional drying step before use herein.

The polymerization temperature is typically at least 40°C and preferably at least 60°C. Whilst the reaction temperature may be 200°C or higher, it is preferred that the temperature does not exceed 190°C or even 180°C in order inter alia: to maintain workable reactor pressures; to minimize the formation of volatile impurities or other by-products; and, to maintain adequate catalyst activity without deactivating or decomposing the catalyst.

The process pressure is not critical: as such, the polymerization reaction can be run at sub-atmospheric, atmospheric, or super-atmospheric pressures but pressures at or slightly above atmospheric pressure are preferred.

The epoxide monomer(s) and the siloxane monomer(s), and any further monomers used, may be fed to the reaction vessel on demand by continuously pressurizing the reactor with the monomers to a predetermined internal reactor pressure. During the epoxide feed stage, the concentration of un-reacted epoxide(s) and/or siloxane(s) in a semi-batch reactor should desirably be maintained at a level of from 0.01 to 10 wt.% or from 0.1 to 5 wt.%, based on the weight of the polymerization mixture. The epoxide feed and the siloxane feed is then continued until enough has been introduced to enable the target product molecular weight to be attained. After the epoxide feed and the siloxane feed is completed, the reaction mixture may be maintained at the polymerization temperature to promote the consumption of any remaining monomers.

### Polymerization of Epoxides and Siloxanes with CO₂

Carbon dioxide, which is subjected to copolymerization with the epoxide(s) and the siloxane(s), is introduced into the reaction vessel in a gaseous form. In addition, the copolymerization reaction is preferably carried out under an inert atmosphere in order to exclude oxygen from the vessel. As such, carbon dioxide coexists with an inert gas such as nitrogen, helium or argon in the reaction vessel. The partial pressure of carbon dioxide in the reaction vessel is generally from 0.1 to 6 MPa but is preferably from 1.0 to 3.0 MPa. This partial pressure should equate to a molar ratio of epoxide monomer(s) to carbon dioxide of from 1:0.1 to 1:10 commonly or from 1:0.5 to 1:3.0 in more preferred embodiments. A desirable molar ratio of from 1:1.0 to 1:2.0 might be noted.

The copolymerization reaction of said at least one epoxide monomer and said at least one siloxane with carbon dioxide is conventionally carried out in the presence of an inert liquid organic solvent. Suitable inert solvents for the copolymerization are organic solvents selected from the group consisting of: esters; ketones; halogenated hydrocarbons; alkanes; alkenes; and aromatic hydrocarbons. Exemplary solvents are methylene chloride, trichloroethylene, toluene, xylene, butyl acetate, amyl acetate, isobutyl acetate, methyl isobutyl ketone, methoxybutyl acetate, cyclohexane, cyclohexanone, dichlorobenzene, diethyl ketone, di-isobutyl ketone, dioxane, ethyl acetate, ethylene glycol monobutyl ether acetate, ethylene glycol monoethyl acetate, 2-ethylhexyl acetate, glycol diacetate, n-heptane, hexane, isobutyl acetate, isooctane, isopropyl acetate, methyl ethyl ketone, tetrahydrofuran or tetrachloroethylene or mixtures of two or more of the recited solvents.

In said copolymerization of epoxide monomer(s) and siloxane monomer(s) with carbon dioxide, the use of co-catalysts is not precluded and such co-catalysts may generally be used in an amount up to 1,000 ppm, based on the weight of the copolymer product. Without intention to limit the present invention, suitable co-catalysts may include sulfur and/or at least one compound containing one or more active hydrogen atoms. As exemplary co-catalysts, which may be used alone or in combination, may be mentioned: water; salts containing water of crystallization selected from halides, nitrates, sulfates, pyrophosphates, phosphates, carbonates, borates or acetates of magnesium, calcium, zinc, aluminum or cadmium; inorganic acids, such as hydrogen sulfide and hydrogen polysulfides; monols or poylols, such as methanol, 1,4-butanediol, trimethylol propane and pentaerythritol; ketones, such as acetone, methyl ethyl ketone and acetylacetaone; aldehydes, such as acetaldehyde and propionaldehyde; organic acids, such as oxalic acid and isophthalic acid; polyamines, such as piperazine, ethylenediamine and hexamethylenediamine; primary mono-amines, such as ethylamine, propylamine and aniline; ammonia; hydrazines; esters or amides, such as dimethyl malonate and acetamide; nitrile compounds, such as acetonitrile and propionitrile; nitro compounds containing an active hydrogen, such as nitromethane and nitroethane; and, phenolic compounds such as resorcin, hydroquinone, aminophenol and novolac resins.

The polymerization temperature is typically in the range from 0 to 60°C, for example from 20 to 40°C: performance at room temperature is not therefore excluded. The copolymerization reaction can continue until the epoxide monomer(s) are completely consumed, or until sufficient progression of the reaction is established after from 2 to 20 hours. Thereafter the reaction may be terminated by removal of the carbon dioxide gas and/or with a suitable reaction terminator. The skilled reader will be able to select conventional reagents for terminating the polymerization reaction for polycarbonate but mention in this regard may be made of compounds having an active proton such as methanol, water and hydrochloric acid.

### Compositions and Applications of the Copolymers

By way of an important example, the above-described method may yield a hydroxyl functionalized copolymer through selection of a monool or polyol initiator and, in particular, a polyol initiator having a number average molecular weight (Mₙ) of from 100 to 10,000 and a functionality (number of active hydrogens per molecule) of from 2 to 8. However, irrespective of the exact functionalization thereof, the functionalized copolymer derived from this method may be used as a reactive component for coating, sealant or adhesive compositions based on active hydrogen reactive compounds.

The copolymers derived in the above-described polymerization processes may possess a number average molecular weight (Mₙ) of from 500 to 50,000 g/mol, preferably from 3,000 to 50,000 g/mol, most preferably from 8,000 to 15,000 g/mol. Moreover, the copolymers may be characterized by a polydispersity index (PDI) in the range from 1.0 to 2.0, preferably from 1.0 to 1.8, most preferably from 1.15 to 1.4.

Where a hydroxyl functional initiator is employed, the polyether polyols produced by operation of the process of the invention may be characterized by at least one of: a nominal functionality of from 2 to 8, in particular from 2 to 4; an unsaturation of at most 0.01 meq/g, preferably at most 0.025 meq/g, most preferably at most 0.020 meq/g and, preferably by a hydroxyl number of from 10 to 80 mg KOH/g.

It is anticipated that the functionalized polyether-polysiloxane copolymers or the polyether-polycarbonate-polysiloxane copolymers of the present invention per se may find utility as a curable, crosslinkable or otherwise reactive component of a coating composition, a sealant composition or an adhesive composition, such as a pressure sensitive adhesive composition. In particular, hydroxyl-functionalized polyether-polysiloxane copolymers or polyether-polycarbonate- polysiloxane copolymers may constitute one component of a composition which further comprises at least one compound having at least one hydroxyl group-reactive functionality preferably selected from isocyanate groups, cyano groups, melamine groups, epoxy groups, acrylate groups, methacrylate groups, ester groups, carbonate groups, cyclocarbonate groups, carboxylic acid groups or anhydride groups.

In an illustrative embodiment of the present invention, there is provided a two-component (2K) polyurethane composition comprising component (I) and component (II), wherein component (I) comprises a polyisocyanate and component (II) comprises a hydroxyl functional polymer obtained in accordance with the above-described process. The composition may be further characterized in that the molar ratio of isocyanate groups (NCO) in component (I) to hydroxyl groups (OH) in component (II) is in the range from 0.8:1 to 2.5:1, preferably from 1.3:1 to 1.8:1.

A composition, such as a coating, sealant or adhesive composition comprising copolymers obtained in the present invention will typically further comprise adjuvants and additives that can impart improved properties to these compositions. For instance, the adjuvants and additives may impart one or more of: improved elastic properties; improved elastic recovery; longer enabled processing time; faster curing time; and lower residual tack. Included among such adjuvants and additives are catalysts, plasticizers, stabilizers, antioxidants, fillers, reactive diluents, drying agents, adhesion promoters and UV stabilizers, fungicides, flame retardants, rheological adjuvants, color pigments or color pastes, and/or optionally also, to a small extent, solvents.

A "plasticizer" for the purposes of this invention is a substance that decreases the viscosity of the composition and thus facilitates its processability. Herein the plasticizer may constitute up to 40 wt.% or up to 20 wt.%, based on the total weight of the composition, and is preferably selected from the group consisting of: polydimethylsiloxanes (PDMS); diurethanes; ethers of monofunctional, linear or branched C₄-C₁₆ alcohols, such as Cetiol OE (obtainable from Cognis Deutschland GmbH, Dusseldorf); esters of abietic acid, butyric acid, thiobutyric acid, acetic acid, propionic acid esters and citric acid; esters based on nitrocellulose and polyvinyl acetate; fatty acid esters; dicarboxylic acid esters; esters of OH-group-carrying or epoxidized fatty acids; glycolic acid esters; benzoic acid esters; phosphoric acid esters; sulfonic acid esters; trimellitic acid esters; epoxidized plasticizers; polyether plasticizers, such as end-capped polyethylene or polypropylene glycols; polystyrene; hydrocarbon plasticizers; chlorinated paraffin; and, mixtures thereof. It is noted that, in principle, phthalic acid esters can be used as the plasticizer but these are not preferred due to their toxicological potential. It is preferred that the plasticizer comprises or consists of one or more polydimethylsiloxane (PDMS).

"Stabilizers" for purposes of this invention are to be understood as antioxidants, UV stabilizers or hydrolysis stabilizers. Herein stabilizers may constitute in toto up to 10 wt.% or up to 5 wt.%, based on the total weight of the composition. Standard commercial examples of stabilizers suitable for use herein include sterically hindered phenols and/or thioethers and/or substituted benzotriazoles and/or amines of the hindered amine light stabilizer (HALS) type. It is preferred in the context of the present invention that a UV stabilizer that carries a silyl group - and becomes incorporated into the end product upon crosslinking or curing - be used: the products LowiliteTM 75, LowiliteTM 77 (Great Lakes, USA) are particularly suitable for this purpose. Benzotriazoles, benzophenones, benzoates, cyanoacrylates, acrylates, sterically hindered phenols, phosphorus and / or sulfur can also be added.

As noted, the compositions according to the present invention can additionally contain fillers. Suitable here are, for example, chalk, lime powder, precipitated and/or pyrogenic silicic acid, zeolites, bentonites, magnesium carbonate, diatomite, alumina, clay, talc, titanium oxide, iron oxide, zinc oxide, sand, quartz, flint, mica, glass powder, and other ground mineral substances. Organic fillers can also be used, in particular carbon black, graphite, wood fibers, wood flour, sawdust, cellulose, cotton, pulp, cotton, wood chips, chopped straw, chaff, ground walnut shells, and other chopped fibers. Short fibers such as glass fibers, glass filament, polyacrylonitrile, carbon fibers, Kevlar fibers, or polyethylene fibers can also be added. Aluminum powder is likewise suitable as a filler.

The pyrogenic and/or precipitated silicic acids advantageously have a BET surface area from 10 to 90 m²/g. When they are used, they do not cause any additional increase in the viscosity of the composition according to the present invention, but do contribute to strengthening the cured composition.

It is likewise conceivable to use pyrogenic and/or precipitated silicic acids having a higher BET surface area, advantageously from 100 to 250 m²/g, in particular from 110 to 170 m²/g, as a filler: because of the greater BET surface area, the effect of strengthening the cured composition is achieved with a smaller proportion by weight of silicic acid.

Also suitable as fillers are hollow spheres having a mineral shell or a plastic shell. These can be, for example, hollow glass spheres that are obtainable commercially under the trade names Glass Bubbles^{®}. Plastic-based hollow spheres, such as Expancel^{®} or Dualite^{®}, may be used and are described in EP 0 520 426 B1: they are made up of inorganic or organic substances and each have a diameter of 1 mm or less, preferably 500 µm or less.

Fillers which impart thixotropy to the composition may be preferred for many applications: such fillers are also described as rheological adjuvants, e.g. hydrogenated castor oil, fatty acid amides, or swellable plastics such as PVC.

The total amount of fillers present in the compositions of the present invention will preferably be from 1 to 80 wt.%, and more preferably from 5 to 60 wt.%, based on the total weight of the composition. The desired viscosity of the curable composition will typically be determinative of the total amount of filler added and it is submitted that in order to be readily extrudable out of a suitable dispensing apparatus - such as a tube - the curable compositions should possess a viscosity of from 3000 to 150,000, preferably from 40,000 to 80,000 mPas, or even from 50,000 to 60,000 mPas.

Examples of suitable pigments are titanium dioxide, iron oxides, or carbon black.

In order to enhance shelf life even further, it is often advisable to further stabilize the compositions of the present invention with respect to moisture penetration through using drying agents. A need also occasionally exists to lower the viscosity of an adhesive or sealant composition according to the present invention for specific applications, by using reactive diluent(s). The total amount of reactive diluents present will typically be up to 15 wt.%, and preferably from 1 and 5 wt.%, based on the total weight of the composition.

Various features and embodiments of the disclosure are illustrated in the appended drawings and are described in the following examples, which examples are intended to be representative and not limiting.

### EXAMPLES

### Preparation of DMC catalysts

### DMC-2

In a first solution, the cyanide salt (K₃[Co(CN)₆]; 1 Eq.), complexing agent (CA (=tert-butanol ); 11 Eq.) and co-complexing agent (coCA (=2-octyl-1-dodecanol ); 0.03 Eq.) are dissolved in deionized H₂O (615 Eq.). In a second solution, ZnCl₂ (16 Eq.) and the CA (21 Eq.) are also dissolved in deionized H₂O (615 Eq.). Both solutions are combined and stirred vigorously for 20 min. Subsequently, the mixture is centrifuged for 10 min at 10,000. The supernatant is decanted from the precipitate followed by a washing of the precipitate with a solution consisting of deionized water (309 Eq.), CA (59 Eq.) and co-CA (0.03 Eq.) under stirring. The procedure of centrifuging and washing is repeated two times with two different washing solutions. The second washing solution consists of deionized water (154 Eq.), CA (89 Eq.) and co-CA (0.03 Eq.). The third washing solution contains CA (118.4 Eq.) and co-CA (0.017 Eq.). The resulting precipitate is decanted from the solution and is dried for 18 h in vacuo at 50°C.

**Table 1: DMC catalysts prepared.**

| catalyst | salt 1 | salt 2 | CA | co-CA |
|---|---|---|---|---|
| DMC2 | ZnCl2 | K₃[Co(CN)₆] | tert-butanol | 2-octyl-1-dodecanol |

### Alternative DMC catalysts according to WO2012136658A1:

### Example 1

A solution of 6.25 g zinc chloride in 10 ml distilled water is added with vigorous stirring (20,000 rpm) to a solution of 2g potassium hexacyanocobaltate and 1 g Aerosil 380 in 35 ml distilled water. A mixture of 25 g t-butanol in 25 ml distilled water is added to the dispersion and stirred vigorously for 10 min (20,000 rpm). A mixture of 0.5 g. Eutanol G (2-octyldodecan-1-ol) and 0.5 g t-butanol in 50 ml distilled water is added and stirred for 3 min at 1000 rpm. The resulting solid is isolated and stirred with a mixture of 35 g t-butanol and 0.5g Eutanol G in 15 ml distilled water for 10 min (10,000 rpm). Filtration is then carried out and the filter cake is stirred with a mixture of 50g t-butanol and 0.25 g Eutanol G for 10 min (10,000 rpm). Filtration is carried out again, and the residue is concentrated in a rotary evaporator under reduced pressure. A powdery white solid is obtained.

### Example 2

A solution of 6.25 g zinc chloride in 10 ml distilled water is added with vigorous stirring (20,000 rpm) to a solution of 2 g potassium hexacyanocobaltate in 35 ml distilled water. A mixture of 25 g t-butanol in 25 ml distilled water is added to the Suspension. The mixture is then stirred vigorously for 10 min (20,000 rpm). A mixture of 0.05 g 1-dodecanol and 0.50 g t-butanol in 50 ml distilled water is then added and stirred for 3 min at 1000 rpm. A solid is isolated by filtration and stirred with a mixture of 35 g t-butanol and 0.05 g 1-dodecanol in 15 ml distilled water for 10 min (10,000 rpm). After a further filtration, the solid is stirred with a mixture of 50 g t-butanol and 0.025 g 1-dodecanol for 10 min (10,000 rpm). After a further filtration, the residue is dried at 50° C. under ambient pressure.

A powdery white solid is obtained.

### Example 3

A Solution of 1 g potassium hexacyanocobaltate in 18 ml distilled water is added to a solution of 3 g zinc chloride in 5 ml distilled water with vigorous stirring (20,000 rpm) at a temperature of 60° C. A solution of 0.93 g potassium hydroxide in 10 ml distilled water is added and stirred for 5 1. A mixture of 16 ml t-butanol in 12.5 ml distilled water is added to the Suspension. After 10 min of vigorous stirring (20,000 rpm) at 60° C., a mixture of 0.4 ml t-butanol and 0.022 g 10-undecen-1-ol in 25 ml distilled water is added and stirred for 3 min at 1000 rpm. The solid is isolated by filtration and stirred with a mixture of 22.5 ml t-butanol and 0.022 g 10-undecen-1-ol in 7.5 ml distilled water for 10 min at 60° C. (10,000 rpm). Filtration is then carried out and the residue that is obtained is stirred with a mixture of 32 ml t-butanol and 0.011 g 10-undecen-1-ol at 60° C. for 10 min (10,000 rpm). The solid is isolated and dried at 50° C. under normal pressure. Yield: 1.36 g (powdery white solid).

### Example 4

A solution of 3 g zinc chloride in 30 ml distilled water is added with vigorous stirring (7,000 rpm) to a solution of 0.5 g potassium hexacyanocobaltate and 0.1 g Eutanol G (2-octyldodecan-1-ol) in 20 ml distilled water. Immediately after completion of the addition, a solution of 13 g t-butanol in 13 ml distilled water is added to the dispersion and stirred vigorously for 10 min (7,000 rpm). The resulting solid is isolated and stirred with a mixture of 1 g t-butanol and 0.05 g Eutanol G in 25 ml distilled water for 20 min (7,000 rpm). The solid is then separated off again and stirred with a mixture of 20 g t-butanol and 0.05 g Eutanol G in 10 ml distilled water for 20 min (7,000 rpm). The solid is separated off again and stirred with a mixture 0.05 g Eutanol G in 25 g t-butanol for 20 min (7,000 rpm). Filtration is carried out again and the residue is concentrated in a rotary evaporator under reduced pressure.

A powdery, white solid is obtained.

### Example P1: Preparation of α,ω-(hydroxy)-polypropylenglycol-polydimethylsiloxane copolymer (Mₙ ~ 12,000 g/mol; 31 wt.% PDMS; Si(CH₃)₂-OH end groups)

In a 1 L stainless steel reactor, 35.0 g (17.50 mmol) of previously dried polypropylene glycol with a molar mass of 2,000 g/mol, resublimed hexamethylcyclotrisiloxane (i.e., D3; 55.62 g, 250.00 mmol) and 53.28 mg of DMC catalyst (DMC-2, Example 4) are pressurized with Argon three times to 3.0 bar to remove moisture and air and subsequently heated to 120°C. Once the reaction temperature is reached, the Argon pressure is adjusted to 2.0 bar. With a mass flow of 4.17 g/min, 16.6 g (286.21 mmol) of propylene oxide are dosed into the reactor. After a significant pressure drop is observed the catalyst is activated and 70.4 g (1,213.79 mmol) of propylene oxide are continuously dosed into the reactor at a mass flow of 0.417 g/min. Following the completion of dosing, the reaction is stirred at 120°C over night to allow the full reaction of hexamethylcyclotrisiloxane. Subsequently, residual monomers are removed in vacuo (0.001 bar) at 80°C for 60 min. The product is obtained in form of an opaque liquid (PO conversion 100 %; D3 conversion 99 %).

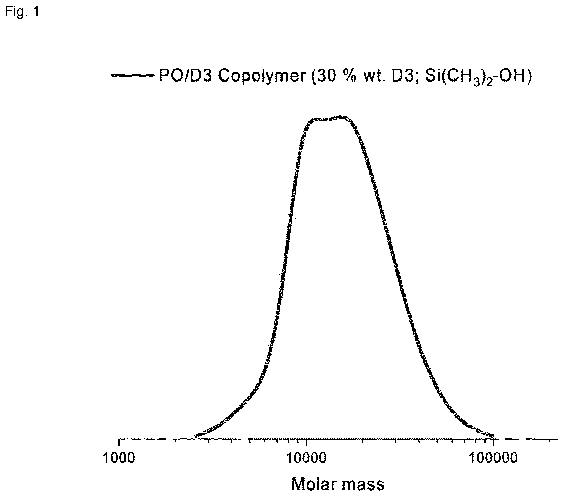

Fig. 1 shows GPC traces of the co-polymer of Example P1 in a logarithmic scale. GPC was performed at 40°C in THF relative to polystyrene standards.

### Example P2: Preparation of α,ω-(hydroxy)-polypropylenglycol-polydimethylsiloxane copolymer (Mₙ - 6,000 g/mol; 34 wt.% PDMS; C-OH end groups)

In a 100 mL stainless steel reactor, 10.1 g (5.04 mmol) of previously dried polypropylene glycol with a molar mass of 2,000 g/mol, resublimed hexamethylcyclotrisiloxane (16.02 g, 72.00 mmol) and 14.09 mg of DMC catalyst (DMC-2, Example 4) are pressurized with Argon three times to 3.0 bar to remove moisture and air and are subsequently heated to 120 °C. Once the reaction temperature is reached, the Argon pressure is adjusted to 2.0 bar. With a mass flow of 4.17 g/min, 8.3 g (143.1 mmol) of propylene oxide are dosed into the reactor. After a significant pressure drop is observed the catalyst is activated and 8.3 g (143.1 mmol) of propylene oxide are continuously dosed into the reactor at a mass flow of 0.417 g/min. Following the completion of dosing, the reaction is stirred at 120 °C over night to allow the full reaction of hexamethylcyclotrisiloxane. Subsequently, additional 4.15 g (71.55 mmol) of propylene oxide are does to the reactor at a mass flow of 0.417 g/min. Once the PO-dosage is completed, the reaction is allowed to stir at 120°C for 1 h followed by removal of volatiles in vacuo (0.001 bar) at 80°C for 1 h. The product is obtained in form of an opaque liquid (PO conversion 100 %, D3 conversion 99 %).

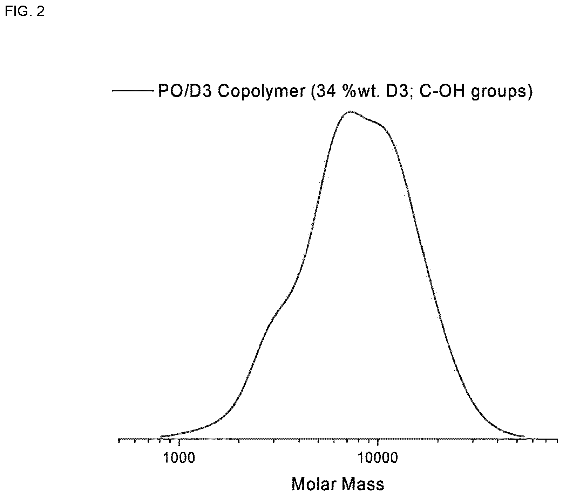

Fig. 2 shows GPC traces of the co-polymer Example P2 in a logarithmic scale. GPC was performed at 40°C in THF relative to polystyrene standards.

### Example P3: Preparation of α,ω-(hydroxy)-polypropylenglycol-polydimethylsiloxane copolymer (Mₙ - 9,000 g/mol; 38 wt.% PDMS; Si(CH₃)₂-OH end groups)

In a 100 mL stainless steel reactor, 10.1 g (5.04 mmol) of previously dried polypropylene glycol with a molar mass of 2,000 g/mol, resublimed hexamethylcyclotrisiloxane (16.02 g, 72.00 mmol) and 12.96 mg of DMC catalyst (DMC-2, Example 4) are pressurized with Argon three times to 3.0 bar to remove moisture and air and subsequently heated to 120°C. Once the reaction temperature is reached, the Argon pressure is adjusted to 4.8 bar. With a mass flow of 4.17 g/min, 8.3 g (143.10 mmol) of propylene oxide are dosed into the reactor. After a significant pressure drop is observed the catalyst is activated another 8.3 g (143.10 mmol) of propylene oxide are continuously dosed into the reactor at a mass flow of 0.417 g/min. Following the completion of dosing, the reaction is stirred at 120°C over night to allow the full reaction of hexamethylcyclotrisiloxane. Subsequently, residual monomers are removed in vacuo (0.001 bar) at 80°C for 60 min. The product is obtained in form of an opaque liquid (PO conversion 100 %; D3 conversion 99 %).

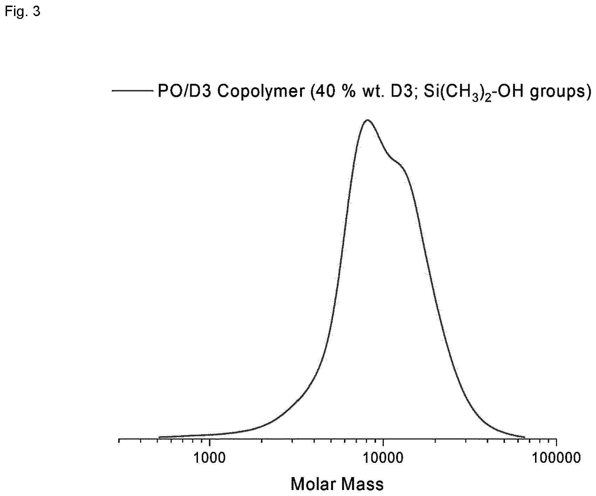

Figure 3 shows GPC traces of the co-polymer Example P3 in a logarithmic scale. GPC was performed at 40°C in THF relative to polystyrene standards.

### Example P4: Preparation of α,ω-(hydroxy)-polypropylenglycol-polydimethylsiloxane copolymer (Mₙ ~ 8,000 g/mol; 32 wt.% PDMS; C-OH end groups)

PO/D3 Copolymerization in 250 g scale, 9.83 mol% (LGr304): In a 1 L stainless steel reactor, 41.7 g (20.85 mmol) of previously dried polypropylene glycol with a molar mass of 2000 g/mol, resublimed hexamethylcyclotrisiloxane (73.86 g, 332.00 mmol) and 75.11 mg of DMC catalyst (DMC-2, Example 4) are pressurized with Argon three times to 3.0 bar to remove moisture and air and subsequently heated to 120 °C. Once the reaction temperature is reached, the Argon pressure is adjusted to 2.0 bar. With a mass flow of 4.17 g/min, 20.75 g (357.75 mmol) of propylene oxide are dosed into the reactor. After a significant pressure drop is observed the catalyst is activated and 94.0 g (1,620.69 mmol) of propylene oxide are continuously dosed into the reactor at a mass flow of 0.417 g/min. Following the completion of dosing, the reaction is stirred at 120 °C over night to allow the full reaction of hexamethylcyclotrisiloxane with subsequent removal of volatiles in vacuo at 80 °C. The product is obtained in form of an opaque liquid.

### Example P5: Preparation of α,ω-(hydroxy)-polypropylenglycol-polydimethylsiloxane copolymer (Mₙ - 12,000 g/mol; 29 wt.% PDMS; Si(CH₃)₂-OH and C-OH end groups)

PO/D3 Copolymerization in 500 g scale, 10.6 mol% D3 (LGr319): In a 1 L stainless steel reactor, 83.4 g (41.7 mmol) of previously dried polypropylene glycol with a molar mass of 2000 g/mol, resublimed hexamethylcyclotrisiloxane (147.71 g, 664.00 mmol) and 150.21 mg of DMC catalyst (DMC-2, Example 4) are pressurized with Argon three times to 3.0 bar to remove moisture and air and subsequently heated to 120 °C. Once the reaction temperature is reached, the Argon pressure is adjusted to 2.0 bar. With a mass flow of 4.17 g/min, 31.0 g (534.49 mmol) of propylene oxide are dosed into the reactor. After a significant pressure drop is observed the catalyst is activated and 239.0 g (4120.69 mmol) of propylene oxide are continuously dosed into the reactor at a mass flow of 0.417 g/min. Following the completion of dosing, the reaction is stirred at 120 °C over night to allow the full reaction of hexamethylcyclotrisiloxane. Subsequently, the reaction is allowed to stir at 120 °C for 1 h followed by removal of volatiles in vacuo at 80 °C. The product is obtained in form of an opaque liquid.

Comparative Example CEP1: Preparation of α,ω-(hydroxy)-polypropylenglycol-b-polydimethylsiloxane-b-polypropylenglycol (Mn-18,000 g/mol); 14 wt.% PDMS; C-OH end groups 40.0 g of α,ω-(3-(2-hydroxypropoxy)propyl)-polydimethylsiloxane (M_{w}: 2,787 g/mol)-as obtained from Example 3 of US2021 040269A1-was charged in a 1 L-stirring autoclave together with 0.028 g of the DMC catalyst (100 ppm based on the amount of the block-copolymer). The reaction mixture was heated at 85°C. under constant stirring at 350 rpm: i) for 45 minutes under vacuum (0.001 bar); and, ii) for 20 minutes under an argon atmosphere (1 bar). The reaction temperature was then increased to 110°C., at which temperature 10 g of propylene oxide (PO) was added. The reaction mixture was stirred constantly at 500 rpm until the pressure in the reactor remained constant: at that point, the reaction temperature was increased and fixed at 120°C. After achieving the set reaction temperature, a further 230 g of PO was added to the reaction mixture through continuous dosing with a constant flow rate of 30 g per hour. After finishing the PO dosing, the reaction mixture was maintained at the fixed temperature for a further one hour. The traces of un-reacted monomer were then removed from the system by applying a vacuum (0.001 bar) for 30 minutes (cf. US 20210040269 A1: Example 5).

The advantages and effects of the present invention are illustrated by Examples P1, P2, P3, P4 and P5 in comparison with Comparative Example CEP1. High molecular weights (Mₙ of 6,261 g/mol, 8067 g/mol, 8074 g/mol, and 12,849 g(mol, respectively) and a monomodal molecular weight distribution (MWD) and a polydispersity of 1.7 or below is obtained. At the same time, OH functionalization and low unsaturation at both ends of the polymer chains are achieved, which double bonds, i.e., unsaturation would result from cleavage of said OH functionalities and would create dead ends for further functionalization of the copolymers that cannot react. All samples 1-5 shows one clear TG, varying between -76.6°C and -83.4°C in differential scanning calorimetry, indicating only one type of polymer being present. Hence, there is no phase separation between the copolymer segments.

**Table 2: Characterization of polyether-polysiloxane copolymers**

| Example | PDMS [wt.%] | *M*ₙ^{a} [g/mol] | *M*_{w}^{a} [g/mol] | PDI^{a} | Viscosity [mPa*s] | OH ^{(exp.)b} [mg KOH/g] | Unsaturation^{d} [meq/g] | End groups^{c} |
|---|---|---|---|---|---|---|---|---|
| P2 | 34.1 | 6,261 | 9,626 | 1.54 | 632 | 15.3 | 0.010 | C-OH |
| P3 | 37.5 | 8,067 | 11,617 | 1.44 | 765 | 14.0 | 0.009 | -Si(CH₃)₂-OH |
| P4 | 32.1 | 8,074 | 13,879 | 1.72 | 1970 | 14.1 | 0.006 | C-OH |
| P5 | 29.0 | 12,849 | 18,430 | 1.44 | 2325 | 12.1 | 0.003 | -Si(CH₃)₂-OH and -C-OH |
| CEP1 | 14.3 | 12,082 | 25,376 | 2.10 | 5534 | 6.2 | 0.010 | C-OH |

| | | | | | | | | |
|---|---|---|---|---|---|---|---|---|
| *^{a}M*ₙ and *M*_{w} were measured by GPC at 40 °C in THF relative using polystyrene standards. PDI is *M*_{w}/*M*ₙ. ^{b}The OH number was determined following the norm DIN 53240-2.^{c} determined from ¹³C NMR (C-OH shift at δ=67.5-66.6 ppm) and ²⁹Si NMR (Si-OH shift at δ=12-11 ppm). ^{d}The unsaturation value was determined following the norm ASTM D 4671. | | | | | | | | |

### Example B-F: Preparation of a Silane-curable Polymer for elastic adhesives or sealants.

Polymer B-F (gamma-trimethoxysilyl functionalization) Polymer B: 328 g Polyether-polysiloxane P2 (OH number=15.3) are dried in a 500 ml three-neck flask at 80°C. in vacuo. Then, under a nitrogen atmosphere at 80°C., 0.07 g dibutyltin dilaurate and 18,4 g 3-isocyanato propyl trimethoxysilane (NCO-silane) are added and the mixture is stirred for one hour at 80° C. The resulting prepolymer mixture is cooled and 7.0 g vinyltrimethoxysilane (Geniosil XL 10, Wacker Chemie AG, D-81737 Munich) and 5.3 g of Bis (2,2,6,6-tetramethyl-4-piperidyl) sebacate (Tinuvin 770 DF, BASF) are added.

The product is stored in a moisture-tight manner in a glass vessel under a nitrogen atmosphere before being further evaluated. The Polymers B-F were synthesized accordingly based on the parameters in Table 3. All polymers B-F can be processed into a curable composition in accordance with the general specification.

**Table 3: Synthesis conditions to optain polyether-polysiloxane copolymers with end-terminated trimethoxysilyl functionalization**

| Example | Polyeth er-polysilo xane [type] | Polyether-polysiloxan e [g] | OH number | NCO-silane [g] | dibutyltin dilaurate [g] | vinyltrimethoxysilane [7] |
|---|---|---|---|---|---|---|
| B | P2 | 318 | 15.3 | 18.4 | 0.07 | 7 |
| C | P3 | 319 | 14.0 | 17.6 | 0.07 | 7 |
| D | P4 | 319 | 14.1 | 17.6 | 0.07 | 7 |
| E | P5 | 320 | 12.1 | 15.5 | 0.07 | 7 |
| F | CEP 1 | 328 | 6 | 8 | 0,07 | 7 |

**Table 4: Characterization of polyether-polysiloxane copolymers in typical sealant application**

| Example | Polyether-polysiloxane | Viscosity [mPa*s] | Hazen^{a} | Optical Appearance at 25°C | Tg [°C] | End groups^{c} |
|---|---|---|---|---|---|---|
| B | P2 | 2543 | 44 | transparent/o paque | | C-OH |
| C | P3 | 807 | 31 | transparent/o paque | -81.1 | -Si(CH₃)₂-OH |
| D | P4 | 2290 | 25 | transparent/o paque | -76.6 | C-OH |
| E | P5 | 2578 | 17 | transparent/o paque | -83.4 | -Si(CH₃)₂-OH and -C-OH |
| F | CEP1 | 5634 | >200 | turbid/phase separation | -71.3 to - 68.0 | C-OH |

| | | | | | | |
|---|---|---|---|---|---|---|
| *^{a}*The Hazen number was determined following the norm ASTM D 1209 | | | | | | |

## Claims

1. Polyether-polysiloxane copolymer having a number average molecular weight (Mₙ) of 500-50,000 g/mol, a polydispersity index of 1.0-2.0, and an unsaturation value of less than 0,02 meq/g, wherein said copolymer is a gradient copolymer.

2. Polyether-polysiloxane copolymer according to claim 1, wherein the polyether-polysiloxane copolymer comprises
f₁ of polyether repeating units and f₂ of polysiloxane repeating units,
a first polymer chain with a first section having a higher fraction of polyether repeating units fg₁₁ than f₁ and a lower fraction of polysiloxane repeating units fg₁₂ than f₂,
said first polymer chain also comprises a second section having a lower fraction of polyether repeating units fg₂₁ than fg₁₁ and a higher fraction of polysiloxane repeating units fg₂₂ than f₁₂, wherein f₁ is the weight fraction of polyether repeating units in the copolymer and f₂ is the weight fraction of polysiloxane repeating units in the copolymer,
wherein fg₁₁ is the weight fraction of polyether repeating units in said first section of the first polymer chain and fg₁₂ is the weight fraction of polysiloxane repeating units in said first section of the first polymer chain,
wherein fg₂₁ is the weight fraction of polyether repeating units in the second section of the first polymer chain and fg₂₂ is the weight fraction of polysiloxane repeating units in the second section of the first polymer chain.

3. Polyether-polysiloxane copolymer according to claim 2, wherein said first polymer chain comprises a third section having a lower fraction of polyether repeating units fg₃₁ than fg₁₁, but higher than fg₂₁ and a higher fraction of polysiloxane repeating units fg₃₂ than f₁₂, but lower than fg₂₂, wherein fg₃₁ is the weight fraction of polyether repeating units in the third section of the first polymer chain and fg₃₂ is the weight fraction of polysiloxane repeating units in the third section of the first polymer chain.

4. Polyether-polysiloxane copolymer according to claim 2 to 3, wherein fg₁₁ > 1,1*f₁, more preferably fg₁₁ > 1,5*f₁, most preferably fg₁₁ > 2*f₁; and/or 1,1*fg₁₂ < f₂, more preferably 1,5*fg₁₂ < f₂, most preferably 2*fg₁₂ < 2*f₂

5. Polyether-polysiloxane copolymer according to any one of claims 1 to 4, wherein the copolymer comprises polyalkylene oxide repeating units, especially polyethylene oxide repeating units and polypropylene oxide repeating units, in particular polypropylene oxide repeating units.

6. Polyether-polysiloxane copolymer according to any one of claims 1 to 5, wherein the copolymer comprises polyalkylsiloxane repeating units, especially poly-C₁-C₄-alkylsiloxane repeating units, in particular polymethylsiloxane repeating units.

7. Polyether-polysiloxane copolymer according to any one of claims 1 to 6, wherein the copolymer comprises a hydroxyl group, preferably an alkyl hydroxyl group or a hydroxyl group bonded to a silicon, preferably also comprising one or more alkyl groups, most preferably two methyl groups.

8. Polyether-polysiloxane copolymer according to claim 7, wherein the hydroxyl group is bonded to at least one terminal end of the copolymer, most preferably to at least two terminal ends of the copolymer.

9. Polyether-polysiloxane copolymer according to any one of claims 1 to 8, wherein the copolymer preferably comprises 1wt.% to 99wt.%, more preferably 15wt.% to 85wt.%, still more preferably >50wt.% to 75wt.%, most preferably 60wt.-% to 70wt.% of polyether repeating units, and 1wt.% to 99wt.%, more preferably 10wt.% to 75wt.%, still more preferably 25wt.% to <50wt.%, most preferably 30wt.-% to 40wt.% of polysiloxane repeating units.

10. Polyether-polysiloxane copolymer according to any one of claims 1 to 9, wherein the copolymer has a number average molecular weight (Mₙ) of from 3,000 to 50,000 g/mol, most preferably from 8,000 to 15,000 g/mol; a polydispersity index (PDI) preferably from 1.0 to 1.8, most preferably from 1.15 to 1.4; an unsaturation of preferably at most 0.025 meq/g, most preferably at most 0.020 meq/g; and preferably a hydroxyl number of from 10 to 80 mg KOH/g.

11. A two-component (2K) composition comprising at least one component (I) and at least one component (II), wherein component (I) comprises at least one compound having at least one hydroxyl group-reactive functionality preferably selected from isocyanate groups, cyano groups, melamine groups, epoxy groups, acrylate groups, methacrylate groups, ester groups, carbonate groups, cyclocarbonate groups, carboxylic acid groups or anhydride groups, most preferably selected from isocyanate groups, and component (II) comprises a hydroxyl-functionalized polyether-polysiloxane copolymer according to any one of claims 1 to 10.

12. A method for producing a polyether-polysiloxane copolymer according to any one of claims 1 to 10, wherein a mixture of at least one alkylene oxide and at least one siloxane is polymerized in the presence of a Double Metal Cyanide (DMC) catalyst.

13. A method according to claim 12, wherein the catalyst is obtainable by mixing
a) at least one double metal cyanide compound,
b) at least one organic complexing agent and
c) at least one primary alcohol with 6 to 24 C atoms.

14. A method according to claim 13, wherein said catalyst is obtainable by mixing at least one salt of the general formula (1a)
M¹*_{d'}*X*_{g'}* (1a)
where M¹ is a Zn, Fe, Co, Mn, Cu, Sn, Pb or Ni ion, X is an anion and d' and g' are integers >0 and assume values such that the salt M¹*_{d'}*X*_{g'}* is electroneutral, with at least one complex of the general formula (Ib)
M⁴*_{h'}*[M²(CN)*_{e'}*]*_{f'}* (1b)
where M⁴ is an alkali metal ion, M² is a Co, Cr, Mn, Ir, Rh, Ru, V or Fe ion and h', e' and f are integers >0 and assume values such that the complex M⁴*_{h'}*[M²(CN)*e'*]*_{f'}* is electroneutral

15. Use of the polyether-polysiloxane copolymer according to any one of claims 1 to 10, a two-component (2K) composition according to any one of claim 11 or copolymers obtainable by the method of according to any one of claims 12 to 14 as a reactive component for coating, sealant or adhesive compositions based on active hydrogen reactive compounds.
